(19)

Europäisches Patentamt

European Patent Office

Office européen des brevets

(11) **EP 2 196 434 A1**

(12) **EUROPEAN PATENT APPLICATION**

(43) Date of publication:
**16.06.2010 Bulletin 2010/24**

(51) Int Cl.:
**C01B 25/45** (2006.01)   **H01M 4/58** (2010.01)

(21) Application number: **08021669.0**

(22) Date of filing: **12.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Max-Planck-Gesellschaft zur Förderung der Wissenschaften e.V.
80539 München (DE)**

(72) Inventors:
- **Kallfass, Christoph
  74523 Schwäbisch Hall (DE)**
- **Schier, Hermann
  70563 Stuttgart (DE)**
- **Schubert, Helmut
  13465 Berlin (DE)**

(74) Representative: **Manitz, Finsterwald & Partner GbR
Postfach 31 02 20
80102 München (DE)**

(54) **Phosphate based compound, use of the compound in an electrochemical storage device and methods for its preparation**

(57)   A phosphate based compound basically comprising
-A: exchangeable cations used in charging and discharging, e. g. Li, Na, K, Ag,
- B: non-exchangeable cations from the transition metals, group 3 - 12 of the periodic table of elements, e. g. Fe, Mn, Co, Cr, Ti, V, Cu, Sc,
- C: 60 Mol-% - 90 Mol-%, preferably 75 Mol-% of the compound being phosphate $(PO_4)^{3-}$ anions, where oxygen is or may be partially substituted by a halide (e. g. $F^-$, $Cl^-$) and/or $OH^-$ to a maximum concentration of 10 Mol-% of the oxygen of the anions and wherein said $(PO_4)^{3-}$ coordination polyhedra may be partially substituted by one or more of: $SiO_4^{4}$ silicate, $BO_3^{3-}$ borate, $CO_3^{2-}$ carbonate, $H_2O$ water up to a maximum amount of < 31 Mol-% of the anions, said compound being in crystalline form and having open elongate channels extending through the unit cell of the structure and with the compound being present either in single crystal form or as an anisotropic microcrystalline or nanocrystalline material. The phosphate based compound is used as an electroactive material, for example as a cathode, an anode or a separator in an ion battery or electrochemical storage device or electrochemical cell.

EP 2 196 434 A1

**Description**

The present invention relates to a phosphate based compound having a novel structure and suitable, amongst other things, for use as an electrode material such as a cathode or an anode or as an electroactive material in a primary or secondary battery or in another type of electrochemical storage device or electrochemical cell and also to methods of preparing such a material.

In the last eleven years the material $LiFePO_4$, an ortho-phosphate, has adopted a central position in the research, development and optimization of new cathode materials, in particular for use in lithium ion batteries. The first description of the electrical properties of this synthetically manufactured ortho-phosphate dates from the year 1997 and was the starting point for rapid development, to the extent that it is nowadays a preferred cathode material used in lithium-ion batteries. More recently it has been found that the naturally occurring mineral triphylite, with the simplified chemical formula $LiFePO_4$, is likewise suitable as a cathode material. This is described in the paper by Ravet, N., Chouinard, J., Besner, S., Gautier, M. Armand, M. entitled "Electroactivity of natural and synthetic triphylite" in the Journal of power sources, 97-98:503-507, 2001.

The $LiFePO_4$ materials used to date are isostructural to olivine.

Despite the extensive development work which has gone into the development of $LiFePO_4$ materials the commercially available versions still have many disadvantages and are far from satisfactory. Thus, there is a wide diversity of $LiFePO_4$ materials which do not have the same properties.

There is an ongoing endeavour to achieve ever more powerful battery materials with excellent chemical, electrical, mechanical and environmentally compatible characteristics such as are necessary for use in the most diverse technical communication apparatus and drive technologies.

The principal object underlying the present invention is to provide a new class of materials which are ideally suited for use as an electroactive material particularly in batteries, especially but not only in lithium ion batteries and also materials with excellent storage capacities for various types of ions. It is a further object to provide a new class of materials which is superior in many respects to $LiFePO_4$, not just in its physical, chemical and electrochemical properties but also with respect to its ease of manufacture, favourable cost and environmentally friendly properties.

In order to satisfy this object there is provided a phosphate based compound comprising :

- A: exchangeable cations used in charging and discharging and being at least one of Li, Na, K and Ag,

  - wherein up to 25 Mol-% of the compound may be present in each of the following categories:

    - elements of Group 1 of the periodic table of elements,
    - elements of Group 2 of the periodic table of elements,
    - elements of Group 13 of the periodic table of elements,
    - elements of the group of transition metals, group 3 - 12 of the periodic table of elements, e. g. Mn, Fe, Ag
    - elements of Group 14 of the periodic table of elements, e.g.Pb

- B: non-exchangeable cations from the transition metals, e. g. Fe, Mn, Co, Cr, Ti, V, Cu, Sc

  - wherein 9 Mol-% - 23 Mol-%, preferably 16 Mol-% of the compound may be present in each of the following categories:

    - elements of Group 1 of the periodic table of elements,
    - elements of Group 2 of the periodic table of elements,
    - elements of Group 13 of the periodic table of elements,
    - elements of the group of transition metals, group 3 - 12 of the periodic table of elements, e. g. Mn, Fe,
    - elements of Group 14 of the periodic table of elements, e. g. Pb

- C: 60 Mol-% - 90 Mol-%, preferably 75 Mol-% of the compound being phosphate $(PO_4)^{3-}$ anions where oxygen is or may be partially substituted by a halide (e. g. F, Cl) and/or OH- to a maximum concentration of 10 Mol-% of the oxygen of the anions,

  - wherein said $(PO_4)^{3-}$ anions may be partially substituted by one or more of:

    - $SiO_4^{4-}$ silicate,
    - $BO_3^{3-}$ borate,
    - $CO_3^{2-}$ carbonate,

- $H_2O$ water up to a maximum amount of < 31 Mol-% of the anions,
- said compound being in crystalline form and having elongate channels extending through the unit cell of the structure and
- with the compound being present either in single crystal form or as an anisotropic microcrystalline or nanocrystalline material.

The value of less than 31 Mol-% is selected because at 31 Mol-% the compound becomes unstable and for this reason values higher than 30 Mol-% should preferably not be selected.

The compound can additionally consist of at least one element selected from the group consisting of Group 2 of the periodic table of elements and aluminium. Aluminium is optional.

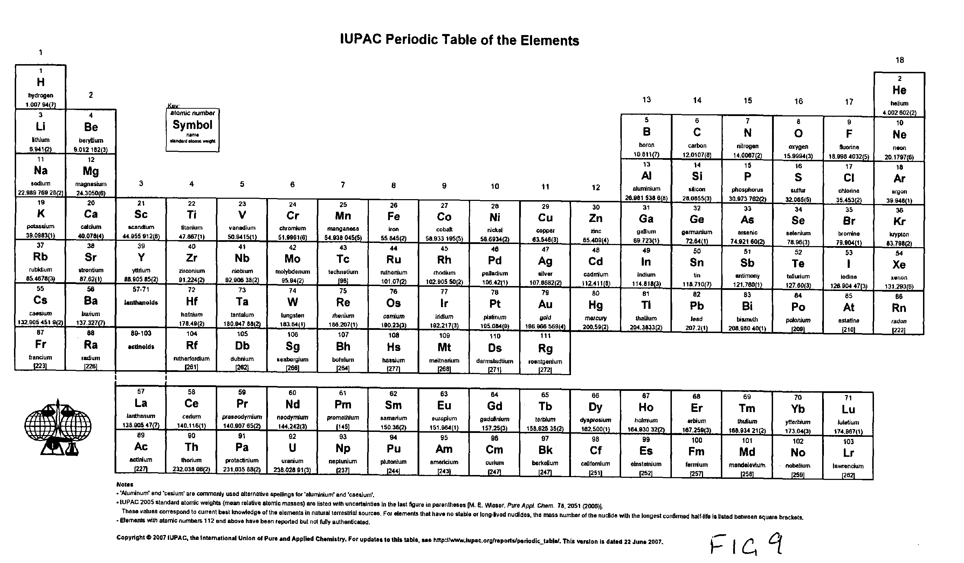

Moreover, the element selected from the group of transition metals can comprise at least one of Sc, Ti, V, Cr, Mn, Fe, Co, Ni, Cu and Zn. In the following text the expression "transistion metal" is a synonym for the elements of Group 3-12 of the periodic table of elements (Fig. 9).

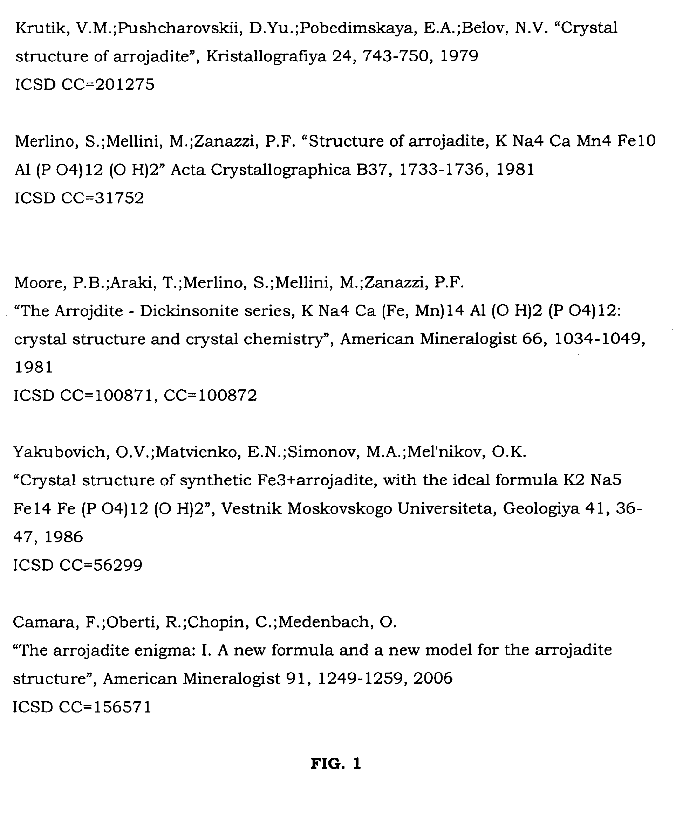

Some materials of the general class described above are known and are generally referred to as "Arrojadites". In the following the term "Arrojadite" will be used as a generic term or synonym to describe the crystalline structure in accordance with the present invention. Arrojadites are known per se and seven different structure models have been described in five publications (as listed in Fig. 1).

These compositions are either naturally occurring forms of Arrojadite or synthetically prepared forms. Although their crystalline nature has been identified no-one has hitherto recognised that they include elongate channels extending through the respective unit cells from one side to the other, but are described as isolated parts of the framework or as vacancies.

These partially unoccupied lattice sites are usually described as mixed positions of at least two different ions, e.g. for Nickel Plate Arrojadite Fe and A1, which show up as a pseudo atom, e.g. "$Cr^{3+}$", with approximately the same electron density (24 electrons, taken from 92 % $Fe^{III}$ and 8 % $Al^{III}$) in the structural model, data provided as Computer Interchange Format (CIF). The flexible occupations of the different sites offer the technical advantage of filling up these sites with a variety of mobile cations, e.g. Na, Li, K, Ag. In addition, if the split positions are divided between the cations and part of the framework C, the amount of exchangeable cations is even more enhanced.

One important recognition underlying the present invention is that the element or elements filling these elongate channels can readily be removed chemically or electrochemically to form open elongate channels which can subsequently be used to accommodate and reversibly store ions such as Li, Na, K and/or Ag thus making the materials particularly suitable for use as a cathode material in an Li, Na, K or Ag based battery.

Thus the material of the invention can be readily used an electroactive material in the form of an electrode material such as a cathode or anode for a primary or secondary battery or in another form of electrochemical storage device such as a supercapacitor. It can also be used generally as an electroactive material e.g. as a semipermeable membrane used as separator in electrochemical cells or battery.

The material is particularly beneficial when used in an electrochemical storage device because a relatively large amount of the relevant ions can be stored resulting in a high exploitable electrical capacity, which can certainly be increased when the new material has been fully developed. Moreover, the material is dimensionally and chemically stable. Thus there is virtually no change in size of the electrode material when the battery is charged or discharged so that the battery or electrochemical storage device does not suffer mechanical damage due to size changes during the work cycles and has a long working life. Moreover, the fact that there is no chemical change in the structural framework involved during the storage, removal or transport of the relevant ions means that the charge capacity and particularly the useful charge capacity is maintained over very many cycles. This has already been proved experimentally over 5000 charge and discharge cycles and there is no reason why the number of cycles should be limited. This is in stark contrast to other cathode materials, e.g. $LiFePO_4$, where chemical and structural changes take place during charging and discharging cycles resulting in a significant and progressive reduction in the useful charge capacity from the first charge/discharge cycle onwards.

When used in a lithium battery, the element selected for the exchangeable cations is Li or, when used in a sodium battery, the element selected for the exchangeable cations is Na or, when used in a potassium battery the element selected for the exchangeable cations is K or when used in a silver battery, the element selected for the exchangeable cations is Ag.

The material of the invention is not however restricted to use as an electrode in a battery or supercapacitor, it can for example, as suggested earlier in this specification, also be used as a semipermeable membrane for a separator in a battery with the elongate channels serving as a transport passage for the relevant conductive ions or, alternatively, as an ion exchange material, for example in chromatography.

Thus the invention also relates to an electrochemical storage device comprising an electrode formed of a phosphate based compound as described above and to a separator formed from such a phosphate based compound.

The phosphate based compound of the present invention can be prepared by a method comprising the steps of:

- removing from the earth in a suitable location, e. g. the Nickel Plate mine in South Dakota, USA or the Hagendorf mine in the Oberpfalz, Bavaria, Germany, a naturally occurring compound having the chemical composition of any one of claims 1 to 3 together with impurities,
- purification of the naturally occurring compound to remove the impurities, and
- chemically treating the naturally occurring compound, preferably after purification, to remove, so far as possible, exchangeable cations of the type A and the naturally occurring impurities to open up the elongate channels extending through the unit cell of the structure, i.e. to unload or clean them and leave open elongate channels.

The cleaning process can, for example, comprise a flotation process.

It will be appreciated that these processes are very straightforward and can be readily carried out on a large scale and in an environmentally friendly manner so that a favourably priced product can be realised.

In this case, the cleaned compound is chemically treated to remove the exchangeable cation or cations, i.e. Li, Na, K, Ca, Mg, Sr, Al, Fe, Mn, Zn and/or Ag to unload the structure and leave open elongate channels extending through the unit cell of the structure.

The chemical treatment step is conveniently carried out using a complexing agent such as EDTA (2-[2-(Bis (carboxymethyl)amino)ethyl-(carboxymethyl)amino]acetic acid), pentan-2,4-dione (acetyl-acetone), crown-ethers e.g. 18-crown-6 or 1,5-diphenylthiocarbazone (dithiozone). EDTA is particularly favoured as it is a water based and thus environmentally particularly friendly compound.

The method of preparation can also include the further step of at least partially filling the elongate channels with an active element selected from Group 1 of the periodic table of elements and/or Ag. This can, for example, be carried out by immersing said compound in a salt melt, by suspension or electrochemically.

As an alternative to mining the phosphate based compound in accordance with the present invention can also be synthesised, for example using the method proposed by O. V. Yakubovich, E. N. Matvienko, M. A. Simonov and O.K. Mel'nikov in the publication entitled "Crystal Structure of Synnthetic Fe3+- Arrojadite with ideal formula of K2Na5Fe2+14Fe3+(PO4)12(OH)2", Vestnik Moskovskogo Universiteta, Geologiya, Vol. 41, No. 1, pages 36 - 47, 1986.

That is to say the phosphate based compound of the present invention can be synthesised by hydrothermal synthesis, carried out using:

B: non-exchangeable cations, e.g. in the form of an oxide of one or more transition metals, e. g. $Fe_2O_3$

C: anions in the form of a phosphate, e. g. $(NH4)_2HPO_4$ or $(Na,K)_2HPO_4$,

A: exchangeable cations as a soluble salt of one of Li, Na, K and Ag, e. g. KCl, the method being carried out in a pressure vessel in the presence of water in a temperature range of 300° C - 600° C, e. g. 450° C, with the initial concentration of the aqueous solution being selected so that the concentration of A cations, e. g. KCl amounts to 30 - 70 wt%, preferably to about 50 wt% and with CsCl being present in an mount of 70 - 30 wt%, preferably e. g. 50 wt%.

After the synthesis has been completed the material of the invention is present as a crystalline material in an aqueous solution which can be removed leaving the crystalline product with the elongate channels filled with type A cations such as Li, Na, K and/or Ag.

In this case, the synthesised compound is made by synthesis and is not chemically treated to remove the exchangeable cation or cations, because the exchangeable ions are provided directly during the hydrothermal synthesis. The amount of lattice sites for exchangeable cations is highest for the synthetic compound and differs amongst the naturally occurring minerals, e.g. from Nickel Plate and Hagendorf.

The invention will now be described in more detail with reference to the accompanying drawings especially with reference to use of the invention as a cathode material in a lithium ion battery and with the properties of the new material and its preparation being contrasted with that of $LiFePO_4$, currently one of the most promising cathode materials for commercial use in the near future. In the drawings there are shown:

Fig. 1          a table showing the articles dealing with the different crystal models for Arrojadites, which are published in the Inorganic Single Crystal Database (ICSD),

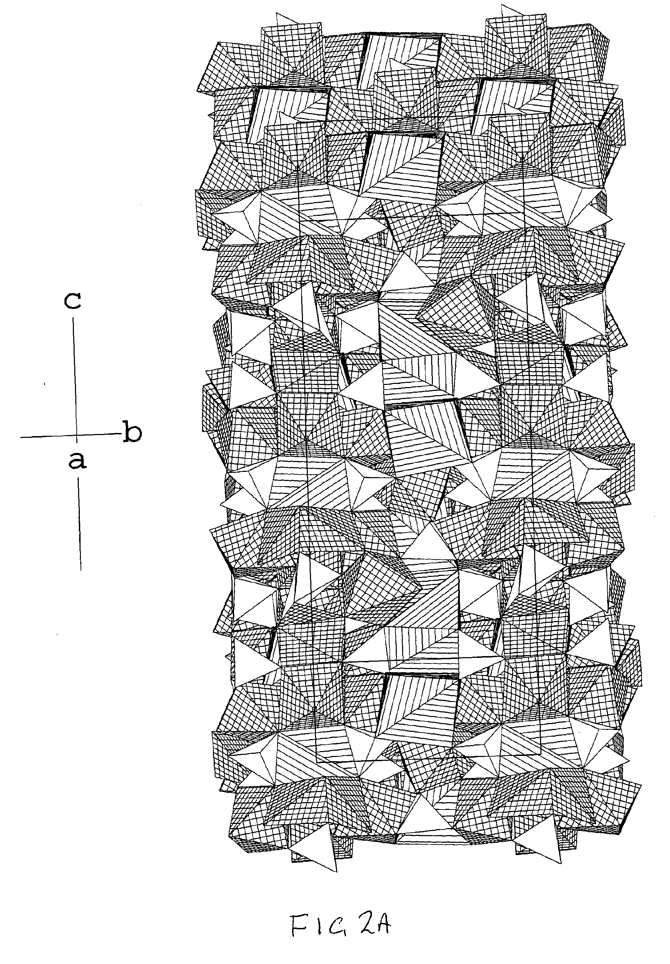

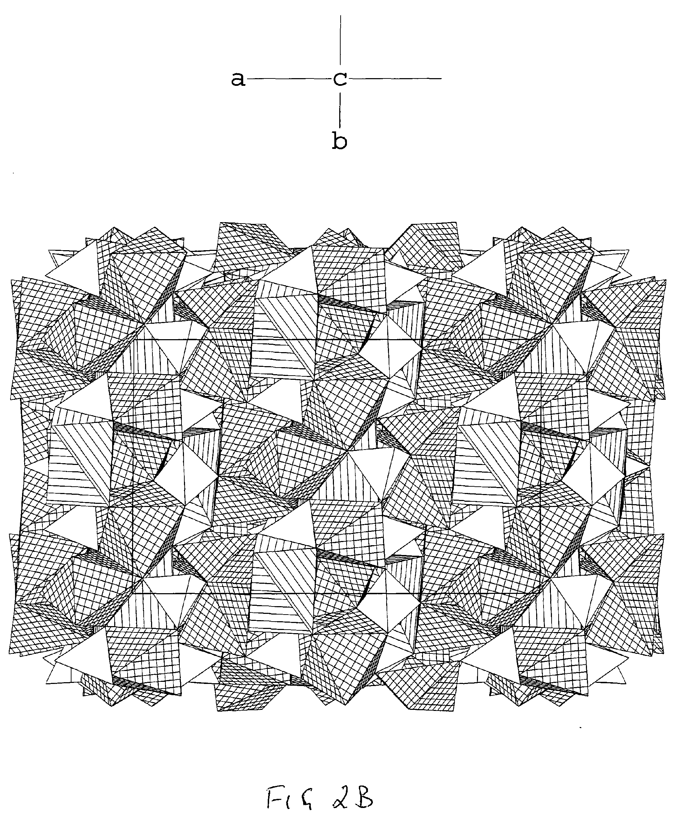

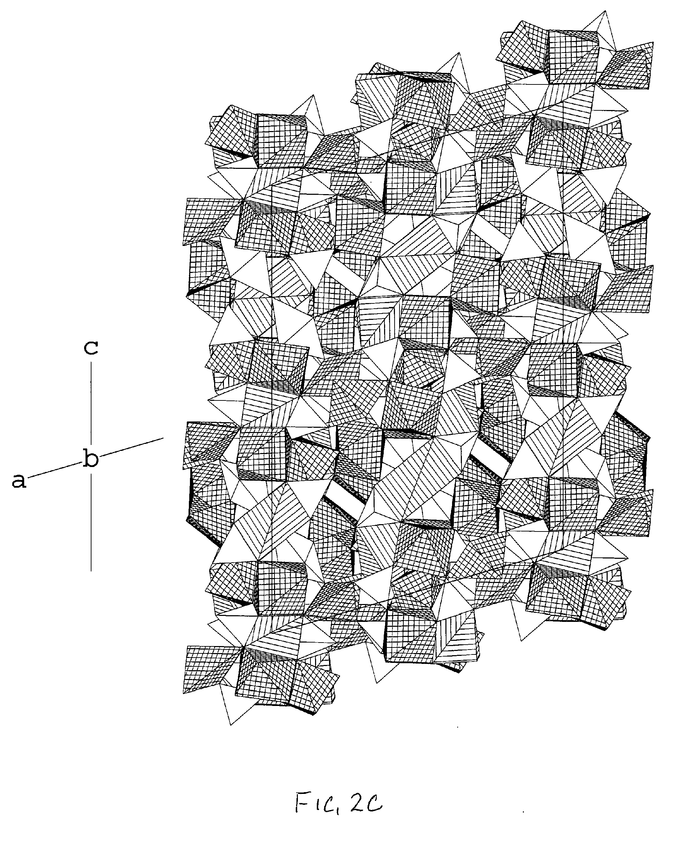

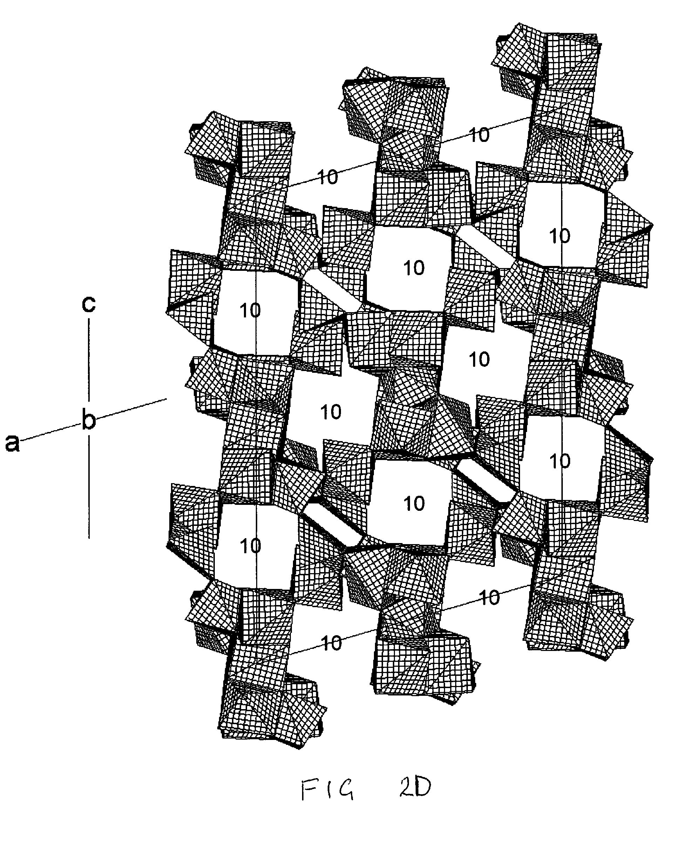

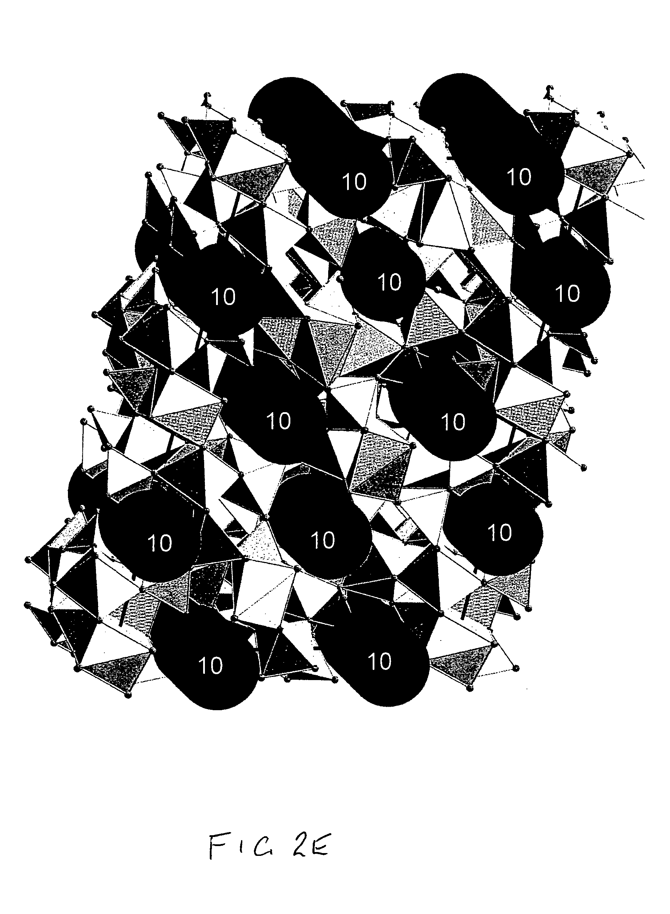

Figs. 2A to 2E          are representations of the unit cell of an Arrojadite crys- tal in accordance with the present invention as seen in the direction of the a-axis (Fig. 2A), c-axis (Fig. 2B) and b-axis (Fig. 2C), with the coordination polyhedra of the type A-cations being shown with lined hatching, with the framework of the type B-cations being shown with squared hatching and with the framework of the type C- anions being shown in white, with Fig. 2D showing the same view as Fig. 2C but presenting only the framework of type B cations building up the channels and omitting all other components for the sake of clarity and with Fig. 2E presenting the same view as Fig. 2C but as an artis- tic impression of the unit cell in three dimensions when viewed along the b-axis, with the elongate channels be- ing shown as approximately black cylinders, although the open channels are not of strictly cylindrical shape,

Figs. 3A, 3B and 3C    flow diagrams illustrating the manufacture of an Arrojadite material in accordance with the present in- vention from a mined material and by synthesis (Figs. 3A and 3B) in contrast to the manufacture of LiFePO$_4$ (Fig. 3C),

Figs. 4A and 4B    diagrams showing the reversible heat cycle of Arrojadite (Fig.4A) and the decomposition of LiFePO$_4$ (Fig.4B) when heated in air,

Figs. 5A and 5B    diagrams showing the reversible heat cycle of Arrojadite (Fig.5A) and the decomposition of LiFePO$_4$ (Fig.5B) when heated in a nitrogen atmosphere,

Fig. 6    a representation of the unit cell of the prior art material LiFePO$_4$ as seen in the direction of the b-axis for com- parison purposes, with the coordination polyhedra of Li$^+$ being shown with lined hatching, with the coordination polyhedra of Fe$^{2+}$ being shown with squared hatching and with the coordination polyhedra of (PO$_4$)$^{3-}$ being shown in white,

Fig. 7    changes in powder patterns of Arrojadite samples in de- pendence on the stirring time in 0.01M EDTA solution using Cu$_{K\alpha 1}$ radiation for recording the powder patterns of the samples 0h, 2h, 21h, 90h, and 189h, these being respectively shifted by 1000 relative intensity units rela- tive to the respectively preceding powder pattern for the sake of clarity,

Fig. 8    a table showing the lattice parameters of LiFePO$_4$ and FePO$_4$ at T = 293K.

Fig. 9    the Periodic Table of the Elements, IUPAC version 22 June 2007 as referred to herein,

Fig. 10    a schematic view of a lithium ion battery and

Fig. 11    an alternative schematic view of a lithium ion battery.

Figs 2A to 2C now show a typical unit cell for a naturally occurring Arrojadite crystal from Nickel Plate, a phosphate based compound of the following formula:

- A: exchangeable cations used in charging and discharging, in this case Li, Na, K, Ag,

    - wherein 10.13 Mol-% of the compound is present in each of the following categories:
    - the following elements of Group 1 of the periodic table of elements: Li 0.57 Mol-%, Na 5.83 Mol-%, K 1.26 Mol-%,
    - the following elements of Group 2 of the periodic table of elements: Mg 1.13 Mol-%, Ca 1.14 Mol-%, Sr 0.02 Mol-%, Ba 0.01 Mol-%,
    - the following elements of the group of transition metals: Fe 2.9 Mol-%, Zn 0.14 Mol-%, Mn traces,
    - the following element of Group 13 of the periodic table of elements: Al 0.09 Mol-%,
    - the following element of Group 14 of the periodic table of elements: Pb 0.03 Mol-%,

- B: non-exchangeable cations from the transition metals in this case Fe, Mn, Co, Cr, Ti, V, Cu, Sc

    - wherein 16.4 Mol-% of the compound is present in each of the following categories:
    - traces of the following elements of Group 1 of the periodic table of elements: e.g. Li
    - traces of the following elements of Group 2 of the periodic table of elements: e.g. Mg, Ca:
    - the following elements of the group of transition metals: Fe 7.16 Mol-%, Mn 5.13 Mol-%, Ti 0.01 Mol-%, Zn traces,
    - the following elements of Group 13 of the periodic table of elements: Al 1.13 Mol-%,
    - the following elements of Group 14 of the periodic table of elements: Pb traces

- C: anions, with 73.45 Mol-% of the compound being anionic in the form of phosphate (PO$_4$)$^{3-}$ where oxygen is partially substituted by halide, e.g. F-, Cl- and/or OH- to a maximum concentration of 10 Mol-% of the oxygen of the anions,

    - wherein said (PO$_4$)$^{3-}$ anions are partially substituted by one or more of:

- traces of $SiO_4^{4-}$ silicate,
- traces of $BO_3^{3-}$ borate,
- traces of $CO_3^{2-}$ carbonate,
- $H_2O$ water 2.4 Mol-%

- in respective amounts of 3.27 Mol-% of the anions.

The compound is present in crystalline form and has elongate channels extending through the unit cell of the structure. It is present here in an anisotropic microcrystalline form.

The individual coordination polyhedra are identified in the figures by different hatching of the coordination polyhedra. Fig. 2D shows the same view as Fig. 2C but presents only the framework of type B cations building up the channels and omits all other components for the sake of clarity. Fig. 2E presents the same view as Fig. 2C but as an artistic impression of the unit cell in three dimensions when viewed along the b-axis, with the elongate channels 10 being shown as approximately black cylinders passing through the unit cell in the direction of the b-axis. Thus Fig. 2E shows a three-dimensional artist's representation of the unit cell of Figs. 2A to 2C which has been shaded to show the presence of elongate channels 10 passing through the unit cell in the direction of the b-axis.

It should be emphasised here that the Arrojadite material of the present invention can be present in the form of single crystal material, in which case the channels 10 extend right through the single crystal (other than at any dislocations which may be present) It is however by no means necessary for the Arrojadite material to be present in single crystal form. Instead it can be present in microcrystalline, 500 $\mu$m - 1 $\mu$m, or nanocrystalline, 1 $\mu$m - 0.001 $\mu$m, form and indeed will normally be present as a powder optionally together with a suitable binder such as poly-vinyl-difluoride (PVDF).

When the powder, for example produced by grinding, is pressed into tablet or film form a certain reorientation of the individual small crystals takes place so that the channels 10 tend to be aligned.

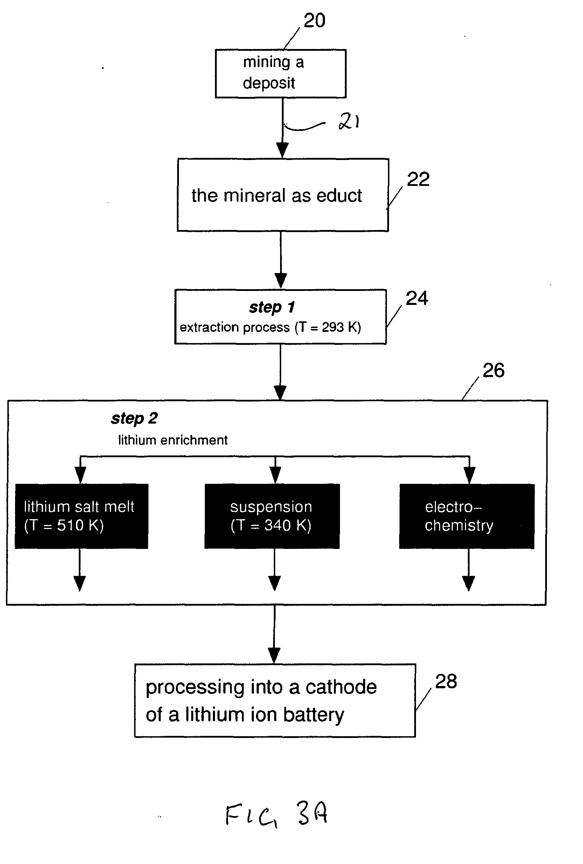

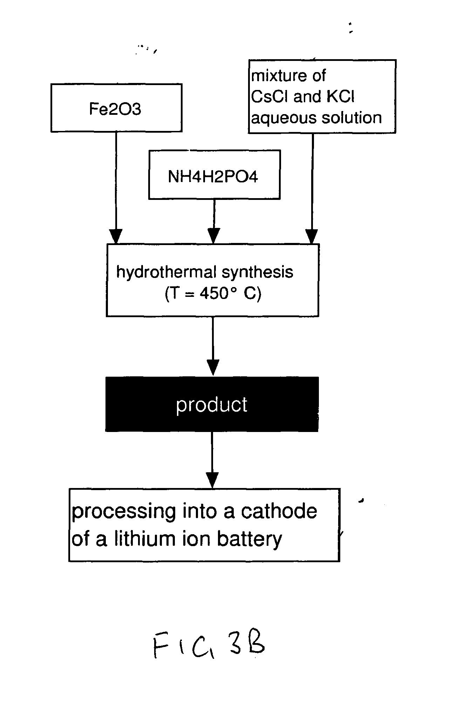

The manufacture of lithium-enriched Arrojadite and the manufacture of $LiFePO_4$ are fundamentally different. In the case of lithium-enriched Arrojadite a mineral or a synthetic manufactured Arrojadite with a defined chemical composition and defined thermal and structural properties is used as an educt and modified chemically in a two-stage process as illustrated in Fig. 3A or in a one-step process for the synthetic material as illustrated in Fig. 3B, in order to be used, for example, as a cathode material for the lithium ion battery.

As shown in Fig. 3A the starting point for the manufacture of a lithium-enriched Arrojadite material is a naturally occurring mined product symbolised in box 20 which has been cleaned by, for example, flotation as shown by arrow 21 to produce a cleaned mineral as an educt as symbolised in box 22. In this connection the educt Arrojadite is mined as a naturally occurring mineral, for example from corresponding deposits such as the Nickel Plate mine in USA as described in the paper by Lindberg, M.L. with the title "Arrojadite, hühnerkobelite and graftonite" in the Am. Mineral., 35:59-76,1950.

The product obtained in box 22 then forms the starting product "educt" for the first process step of cation extraction carried out using a suitable complexing agent such as EDTA, acetyl-acetone, 18-crown-6 or dithiozone. This extraction process can be carried out at room temperature (T = 293 K) as shown in box 24.

The process step of box 24 is then followed by a second process step illustrated in box 26 in the form of lithium enrichment. This can be done in several ways. For example the material from box 24 can be placed in a lithium salt melt for lithium enrichment, e.g. for $LiClO_4$ the melt temperature is about T = 510 K. Alternatively the Lithium enrichment can take place in a suspension of, for example, lithium perchlorate in water, typically at a temperature about T = 340 K. As a further alternative the insertion of lithium into the open elongate channels can take place in a charge cycle when using the material from process step 24 as an electrode material in a lithium ion battery, for example at room temperature or simply in an electrochemical cell used for this purpose. If the enrichment with lithium takes place by a charge cycle in a cell resembling a lithium ion battery in which the material is used as the electrode then the resulting electrode material of step 24, can be prepared into an electrode for a lithium ion battery, for example by pasting it with a binder on a conductive material.

As an alternative Arrojadite materials can be manufactured synthetically, for example by means of hydrothermal processes as described by Yakubovich, O., Matvienko, E. N., Simonov, M. A, Mellnikov, O. K. entitled "Crystal structure of synthetic Fe3+ - arrojadite with ideal formula of K2Na5Fe2+14Fe3+(PO4)12(OH)2" in Geologiya 41:36-47, 1986. This synthesis is illustrated as a flow diagram in Fig. 3B.

After the synthesis has been completed the material of the invention is present as a crystalline material in an aqueous solution which can be removed leaving the crystalline product with the elongate channels filled with type A exchangeable cations such as Li, Na, K and/or Ag.

When the compound is made by synthesis then it is not treated chemically to remove the exchangeable cations because the exchangeable cations are provided during the hydrothermal synthesis.

At this stage it should be emphasised that lithium is only quoted as an example here for the enrichment step and any other suitable ions, for example, Na, K or Ag could be used in one of the procedures mentioned above.

Thus, using methods of "green chemistry" i.e. avoiding organic solvents the manufacture of lithium-enriched Arrojadite material is a two-stage process which is simple to carry out consisting basically of cation extraction and lithium enrichment. This ability to readily remove the elements filling the channels makes it possible to manufacture the material at very competitive cost and with little technical complexity in air using non-poisonous and favourably priced chemicals which can be manufactured on a large scale technically such as EDTA and lithium perchlorate.

It can readily be seen that the process of manufacturing a suitable Arrojadite material is straightforward and does not involve any serious temperature constraints.

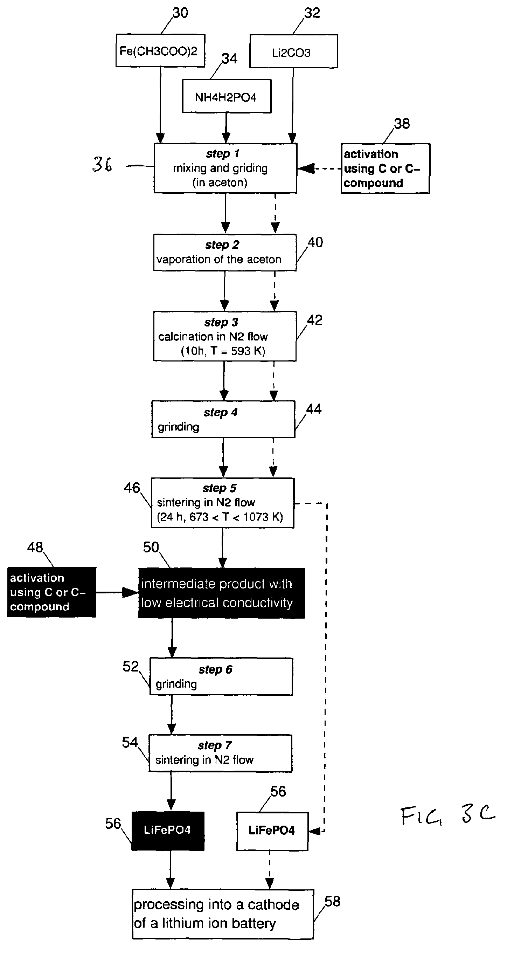

In contrast the manufacture of a conventional $LiFePO_4$ material is much more complicated as can be seen from Fig. 3C which generally illustrates the manufacture of $LiFePO_4$ by means of solid state reaction as described by Yamada, A, Chung, S. C., Hinokuma, K in the paper "Optimised LiFePO4 for lithium battery cathodes" in Journal of the Electrochemical Society 148:A224-229, 2001.

The starting point for this process is to form a mixture of $Fe(CH_3COO)_2$, $Li_2CO_3$ and $NH_4H_2PO_4$ (boxes 30, 32 and 34) and to mix and grind the mixture in acetone (box 36). In order to achieve a sufficient electric conductivity of the material on activation carbon or a carbon-containing compound has to be added, either at this point (box 38) or at a later step in the process chain, box 48.

Thereafter the vaporization of the acetone is effected (box 40) which is followed by calcination in an $N_2$ flow (for 10 h, T = 593 K) as indicated in box 42. The product of this process then has to be ground again, as indicated at box 44, prior to a sintering step (box 46) in an $N_2$ flow (this time for 24h at a temperature 673 < T < 1073 K).

If the activation with carbon was not done at the beginning, box 36, the product will not have sufficient electric conductivity and needs to be activated by additional carbon or carbon-containing compounds, box 48. Then the product is ground again (box 52) and subsequently sintered again (box 54) in an $N_2$ flow to obtain the $LiFePO_4$ material (box 56) which has then to be finally processed into the cathode of a lithium ion battery (box 58).

The lithium enrichment leads with Arrojadite material to an improvement of the electrical conductivity by six orders of magnitude from $\sigma \approx 3 \cdot 10^{-10}$ S / cm to $\sigma \approx 4 \cdot 10^{-4}$ S / cm. The thermal and structural properties are not substantially changed.

In comparison to this the material-typical properties of $LiFePO_4$ such as for example the chemical composition and the structural layout are strongly dependent on the manufacturing process and ultimately lead to $LiFePO_4$ materials with different properties.

The lithium enrichment of Arrojadite in the standard process takes place with lithium perchlorate. By isotope marking using lithium-6, whose natural occurrence in the earths crust is 7.5 %, it was possible to obtain a direct proof of the successful lithium enrichment in Arrojadite material by means of Li-MAS-NMR solid state spectroscopy.

The changing of individual method parameters within a process stage leads to directly understandable changes in the intermediate product that arises. Thus, for example, the extraction time (stirring time) of the educt in the EDTA solution during the first process step affects its grain size, with the grain size reducing with increasing stirring duration. In the second process step there is likewise a simple and direct linking of the method parameters with the manufactured product. Thus the degree of lithium enrichment is dependent on whether a salt melt or an aqueous suspension of lithium perchlorate and Arrojadite is used for the manufacture of the lithium-enriched material. The highest enrichment was obtained using a suspension of Arrojadite powder and $LiClO_4$.

In comparison to lithium-enriched Arrojadite material no simple linkage exists with $LiFePO_4$ between method parameters and manufacturing process and the characteristics of the respectively manufactured product.

The low electrical conductivity of the undoped carbon-free $LiFePO_4$ material has a negative effect on its use as a cathode material above all on the maximum exploitable capacity and the long term stability of such a lithium ion battery.

Various proposals for solving this problem by "activation" of a high ohmic intermediate product in order to manufacture an electrically (highly) conductive cathode material have been published in recent years. In addition to the chemical modification of $LiFePO_4$ material by doping of the Fe lattice sites and the Li lattice sites, as well as the reaction with carbon (variation of the carbon content), proposals such as the optimization of the solid state reaction (for example the sinter temperature, mechanochemical activation) and the investigation of novel synthesis routes (for example hydrothermal processes and sol gel processes) have been at the centre of interest.

The activation by carbon-containing compounds or elementary carbon can take place at two points during the manufacturing process, during synthesis of $LiFePO_4$ or after conclusion in further process steps (Fig. 3C). In dependence on the time of the activation partly differing material properties and side products form. The influence of the side products necessarily formed in dependence on the synthesis route (for example iron phosphide, lithium phosphate and $Fe^{III}$ normal oxide), on the one hand, and the effects of the time point of the addition of carbon or carbon compounds into manufacturing process (activation), on the other hand, have effects on the electrical properties of the $LiFePO_4$ material and is the subject of numerous discussions in technical literature. These interactions, which have hitherto not been comprehensively researched and documented, between the choice of the synthesis route, the educts that are used and the influence of the carbon material on the properties of the product have wide ranging consequences. No clear association between for example the particle/crystallite size and also the total (in situ) carbon content of the powder, on the one hand, and the capacity of the lithium ion batteries respectively manufactured from them, on the other hand, could be derived from six different commercially manufactured carbon-containing $LiFePO_4$ powders of different manufacturers.

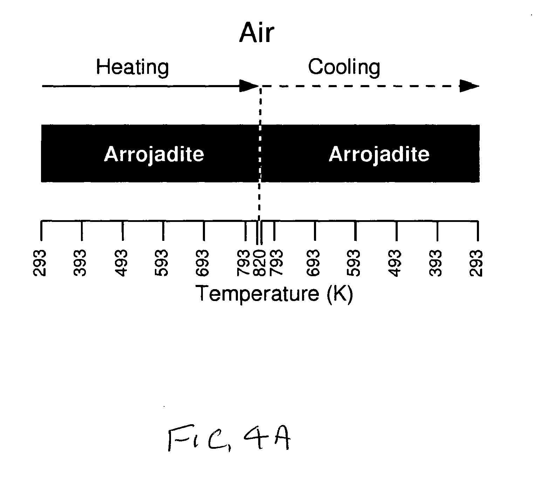

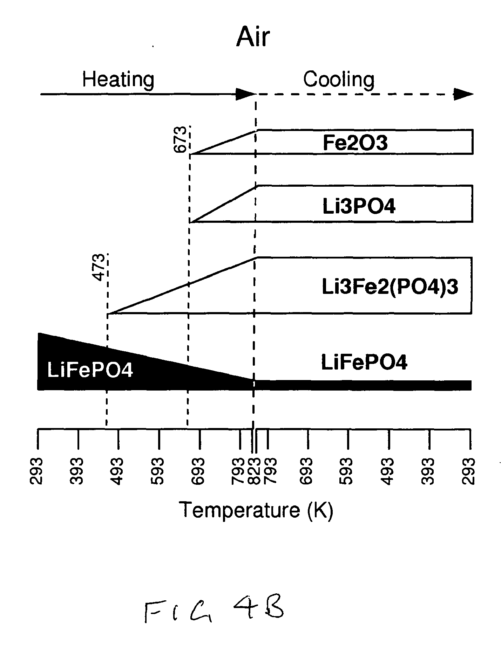

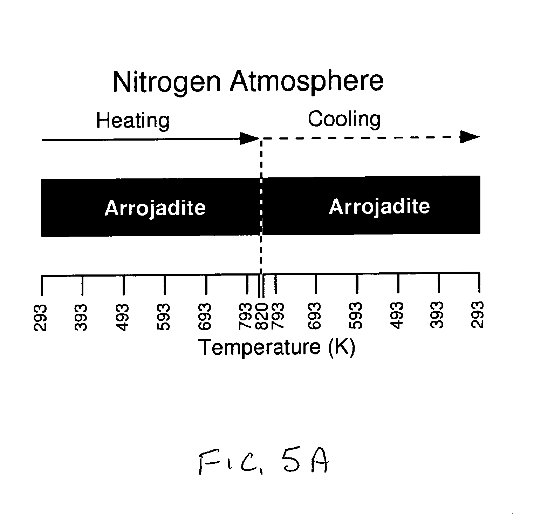

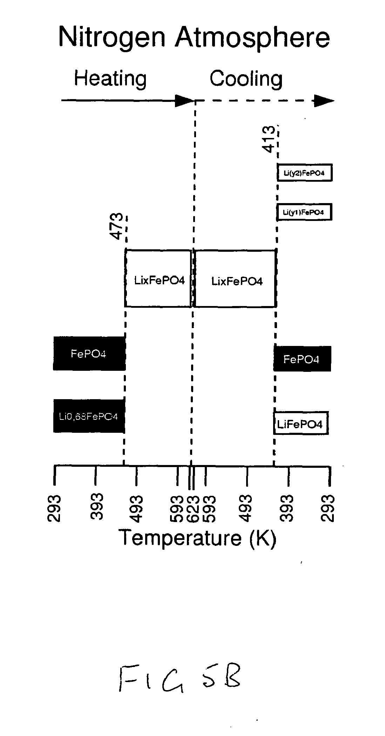

The thermal stability of the two materials Arrojadite and $LiFePO_4$ is fundamentally different when used in different reactive gas atmosphere (oxidizing, reducing and inert). It is illustrated in Figs. 4A and 4B for heating in air and in Figs. 5A and 5B for heating in nitrogen.

The structure of the Arrojadite is maintained both during heating up to a temperature of $T \leq 820K$ and also during subsequent cooling down to room temperature. This circumstance applies both for oxidizing air and also for an inert gas atmosphere of the nitrogen and has been confirmed by independent experiments using in situ high temperature powder diffraction with synchrotron and X-ray radiation (Figs. 4A and 5A). The thermal expansion of the material Arrojadite in the temperature range $293K \leq T \leq 733K$ in the direction of the three crystallographic axes is very small with values for the thermal expansion coefficient $\alpha^a \approx \alpha^b \approx \alpha^c \approx 1 \cdot 10^{-5} \, \dfrac{1}{K}$. The increase of the volume of the unit cell in this temperature range amounts to only $\Delta V \approx 0.11 \%$.

In comparison to this the material $LiFePO_4$ shows a different thermal behaviour. During heating of $LiFePO_4$ in air in the temperature interval $293\,K \leq T \leq 823K$ the material irreversibly decomposes, by the increasing oxidation of the divalent iron contained therein, into a multi-phase system. At $T = 823K$ a mixture of amongst other things $Li_{13}Fe_2^{III}(PO_4)_3$, $Fe_2^{III}O_3$ and a small proportion of the educt $LiFe^{II}PO_4$ is present. This multi-phase mixture is preserved with a luminous bright red colour after cooling down to room temperature (Fig. 4B).

After the first charging and discharging cycle of a lithium ion battery of $LiFePO_4$ a mixture of $LiFePO_4$ and $FePO_4$ is present. During heating (temperature interval $293K \leq T \leq 623K$) of a mixture of this kind of $Li_{0.68}FePO_4$ and $FePO_4$ in a nitrogen atmosphere (Fig. 5B), heating to above $T \geq 473K$ leads to the formation of a $Li_xFePO_4$ phase. During heating to temperatures above $T \geq 773K$ a decomposition of the $Li_xFePO_4$ phase into a plurality of phases takes place. During the cooling process from $623K \geq T \geq 293K$ a mixture of a plurality of phases is formed when the temperature goes below 413K. These phases have different chemical compositions ($LiFePO_4$, $FePO_4$, $Li_{y1}FePO_4$ and $Li_{y2}FePO_4$ with $y1 \neq y2$ and $0 < y1, y2 < 1$) and also slightly differing lattice parameters.

The results of the thermocalorimetric and gravimetric measurements of Arrojadite and $LiFePO_4$ samples are significantly different. The structural changes on heating Arrojadite samples in different gas atmospheres (air and nitrogen atmospheres) observed in independent experiments using in-situ high temperature powder diffraction with synchrotron and X-ray radiation agree with the results of the differential thermal analysis (DTA). In air the exothermic principle maximum of the DTA curve is in a temperature interval $820K \leq K \leq 890K$ which is caused by the decomposition of the Arrojadite structure as recorded by means of in situ high temperature powder diffractometry. The powder patterns of the resulting products from the DTA measurements correspond to those obtained by experiments using in situ high temperature powder diffraction with synchrotron or X-ray radiation in the same gas atmosphere. In a reducing forming gas atmosphere a product arises whose lattice constants can be refined from the powder pattern with those of Arrojadite.

In contrast to the simple phase behaviour of the Arrojadite, the thermal behaviour of $LiFePO_4$ is substantially more complex and is also a subject of current discussion. The observed structural changes during heating and cooling of a mixture of $Li_{0.68}FePO_4$ and $FePO_4$ in nitrogen atmosphere can be correlated with the differential thermocalometric experiments carried out in an argon atmosphere: during heating an endothermic maximum ($T \approx 500K$) and during cooling an exothermic maximum ($T \approx 410K$) occur.

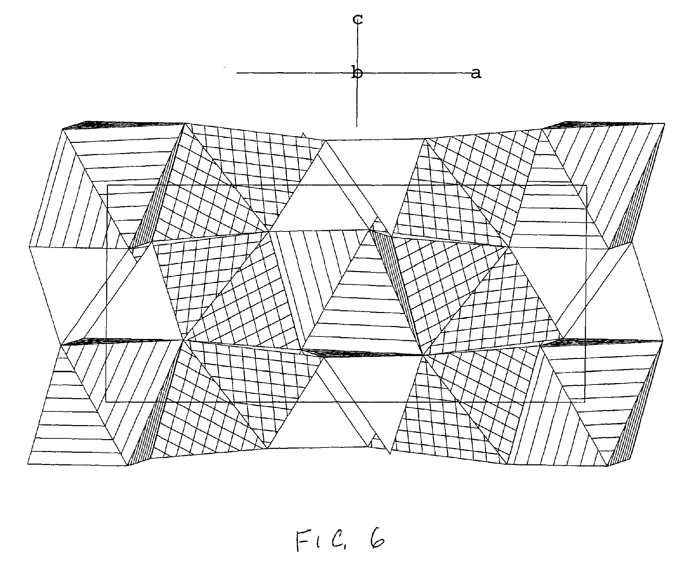

The central difference between the materials Arrojadite and $LiFePO_4$ is the structural framework. That of $LiFePO_4$ is shown in Fig. 6 and can be compared with that of Arrojadite as shown, for example, in Fig. 2C. From this comparison significant distinctions result both with respect to the mechanical properties, the thermal stability, the electrical conductivity and the long term stability of lithium ion batteries manufactured from the respective materials and also with respect to the possibility of optimizing the respective material by chemical modification.

Arrojadite has a space frame structure with channels 10 in Fig. 2D extending along the crystallographic b-axis. This places the Arrojadite structure in the area of the zeolites which would be useless for a lithium in battery for many reasons. The structure of the zeolites is described in the book by Tomlinson A. A. G. Modern zeolites. Structure and function in detergents and petrochemicals. Trans Tech Publications Ltd., Uetikon-Zürich, 1998, ISBN 0-87849-794-0

The occupation of the lattice sites in the channels of the Arrojadite structure forms a basis for the chemical modification of the Arrojadite structure and the use as electro-active cathode material for, for example, a lithium ion battery. The extraction experiments with Arrojadite powder from the "Nickel Plate" mine using an aqueous EDTA solution confirm by experimental routes the occupation of the atomic positions within the channels. A mixed occupation of these atomic positions by the following cations is present: Fe > Na > Mn > Ca > Al > Mg > Zn. The lithium cations in the lithium enriched Arrojadite material move along the corresponding channels 10 opened by the extraction process.

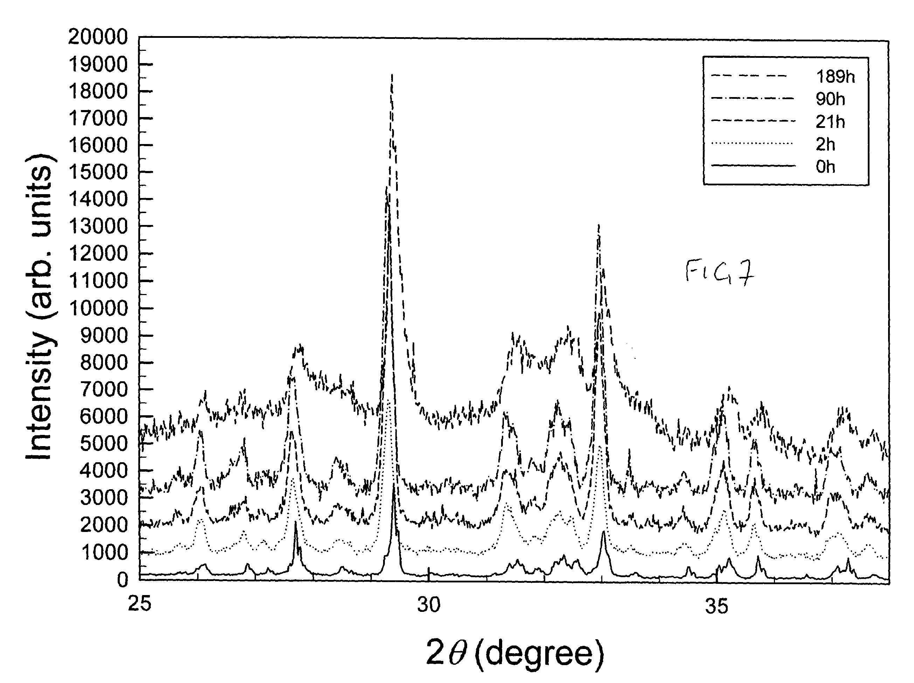

The structure of the Arrojadite is, in contrast to most of the zeolites, despite increasing extraction of the cations from the channels 10 with aqueous EDTA solution so stable that in a time period between 2 and 90 hours extraction duration no changes of the powder pattern relative to the educt can be found in the recorded powder pattern of the respective product. After 189 hours extraction duration nanocrystalline powders have arisen as shown by the powder patterns of Fig. 7. The powder pattern shows reflexes with a full width at half maximum (FWHM) which can be attributed to mechanical reduction during the stirring process. Arrojadite nano-powders can be manufactured also by heating in an oxygen atmosphere under elevated pressure. The characterization of the electrical properties of the material Arrojadite in the form of nano-powders requires further investigation.

In comparison to the Arrojadite material the structure of $LiFePO_4$ material differs significantly: significantly shorter lattice parameters and smaller unit cell.

In the orthorhombic olivine structure of the $LiFePO_4$ material the oxygen anions form an approximately hexagonal closest packing with the layer sequence ABAB. The intermediate spaces which result are occupied by the $Li^+$, $Fe^{2+}$ and $P^{5+}$ cations as shown in Fig. 6. As a result of the arrangement of the Li lattice sites within the orthorhombic olivine structure two different conductive paths for Li cations are possible per unit cell which are perpendicular to each other. In contrast up to eight different conductive paths are present for cations per unit cell of the Arrojadite structure which are all in one direction and therefore their individual conductivities are summed up.

The comparison of the electrical conductivity of the material Arrojadite with that of the material $LiFePO_4$ results in significant differences. These originate from the different structural properties of the respective material.

The electrical conductivity of pressed powder pellets of Arrojadite shows a pronounced anisotropic behaviour and, in contrast to pellets of $LiFePO_4$, can be influenced by the choice of the pressing process by the formation of different orientations of the powder particles within the pellet. As a result, without chemical modification of the Arrojadite powder, an electrical conductivity higher by two orders of magnitude can be achieved in comparison to undoped carbon-free $LiFePO_4$ powder. Texture analyses show that the conductivity paths in the Arrojadite coincide with the channels 10 in the crystal structure. The degree of the lithium enrichment contributes to a further increase of the conductivity of the material Arrojadite, which shows that the conductivity is predominantly based on a lithium ion conduction.

In contrast, the lithium content of the material $LiFePO_4$ does not influence its electrical conductivity. With $LiFePO_4$ a significant increase of the conductivity can be achieved by the manufacture of differently doped powders with mixed occupations at the Li lattice sites or by mixed occupation of the Fe lattice sites. The electrical conductivity and the exploitable maximum capacity can be increased through the choice of the corresponding synthesis route using partly organic educts, sinter temperatures which are as low as possible or by the manufacture and use of nano-powders. The influence of the synthesis route on the resulting side products, such as for example iron phosphide, lithium phosphate and $Fe^{III}$oxide and the associated changes of the properties of the material $LiFePO_4$ are currently also the subject of discussion.

The direct comparison of the two lithium ion batteries of $LiFePO_4$ and of Arrojadite illustrates the significant distinctions with respect to the processes which are taking place during respective charging and discharging cycles and the effects associated therewith on the long term stability and the maximum exploitation period for a respective battery.

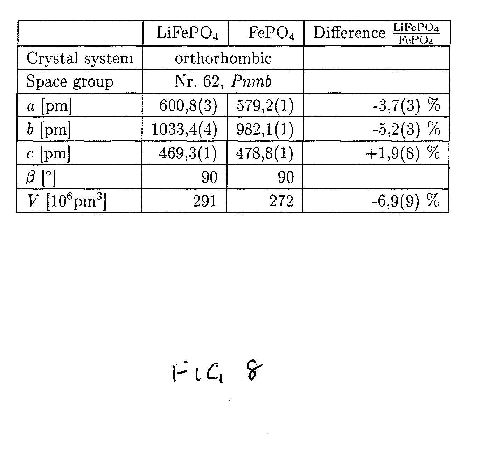

Both the charging cycle and the discharging cycle of a lithium ion battery of $LiFePO_4$ is associated with a phase transition of the 1st order $LiFePO_4$ to $FePO_4$. This migrates as a zone through each material particle. After the first charge and discharge cycle an initially small proportion of $FePO_4$ remains which cannot be converted again into $LiFePO_4$. The concentration of the $FePO_4$ increases with increasing number of the charge and discharge cycles. The phase transition $LiFePO_4$ to $FePO_4$ is also associated with structural changes. For example the length of the lattice parameters and change in size of the unit cell (Fig. 8). The opposing length changes of the lattice parameters $\Delta c \approx +2$ % and $\Delta b = -5.2$ % and $\Delta a = -3.7$ %, in combination with the volume change of $\Delta V \approx -7$ % leads mechanically to stresses and the increasing formation of dislocations. Both determine as limiting factors the maximum possible number of charge and discharge cycles and the exploitable capacity of a lithium ion battery incorporating the $LiFePO_4$ material as a cathode material.

In addition the maximum achievable number of cycles without a capacity loss of the order of magnitude of 10 % or more depends on the environmental temperature, i.e. on the temperature of use of this battery type, when $T \geq 25°$ C.

In comparison to the lithium ion battery of $LiFePO_4$ in a lithium ion battery of Arrojadite only very small changes of the lattice parameters of the material occur after several thousand charge and discharge cycles. The recorded powder pattern of such a lithium ion battery show with an increasing number of charge and discharge cycles only extremely small changes in the measured powder pattern.

The charge and discharge process of a lithium ion battery on the basis of the material Arrojadite proceeds in accordance with another mechanism than is the case with the material $LiFePO_4$. The zeolites serve as an example for the manner of operation of a lithium ion battery of Arrojadite material. The zeolites function as an ion exchange medium due to hollow cavities in the form of "cages" and channels within their scaffold structure. These hollow cavities can be reversibly occupied with different cations.

In the manufacture of lithium enriched Arrojadite material a part or all of the cations which are located at lattice sites within the channels 10 of the Arrojadite structure are extracted and replaced by Li cations. In a directly comparable manner to the ion exchange function of the zeolites Li cations occupy with the Arrojadite material the lattice sites within the channels reversibly and in dependence on the state of charge.

In the structural model of the naturally occurring Arrojadite from Nickel Plate the atom oppositions within the channels are occupied by monovalent (e.g. $K^+$) and multivalent ($Cr^{3+}$, $Fe^{2+}$ and $Fe^{3+}$) cations. The exchange of the pristine monovalent and multivalent cations results in a maximum enrichable lithium content of approximately 1.8 % by weight.

The lithium enrichment by an aqueous suspension of Arrojadite powder and lithium perchlorate achieves with 1.72 % by weight approximately 96 % on the theoretical value. The remaining inactive charge is due to Na cations of the Na-EDTA solution of the 1st process step that are present.

Using a customary laboratory powder diffractometer no structural changes of the Arrojadite can be measured in dependence on the state of charge of lithium ion battery. The Arrojadite material remains a single phase independently of the state of charge and there is no phase transition with the corresponding structural changes as with $LiFePO_4$ material.

The capacity of the lithium ion battery of Arrojadite material is almost independent of the number of charge and discharge cycles. This high cycle stability of the material Arrojadite favours the use on a technical scale. The achieved capacity for experimental lithium ion batteries of Arrojadite built to date is still below that of comparable $LiFePO_4$ batteries on initial charging but it must be borne in mind that the $LiFePO_4$ batteries have undergone a long period of over ten years optimization. Given further development it should be possible to significantly improve the capacity of batteries using Arrojadite cathodes, so that they are highly competitive with $LiFePO_4$ batteries on all counts.

The lithium ion battery of Arrojadite material is completely compatible with the modern technology of the lithium ion battery (3.5 V technology) and has, in contrast to cathode materials isostructural to olivine ($LiCoPO_4$ and $LiNiPO_4$) the potential for environmentally friendly, cobalt-free and nickel-free, high voltage battery technology (U = 5 V).

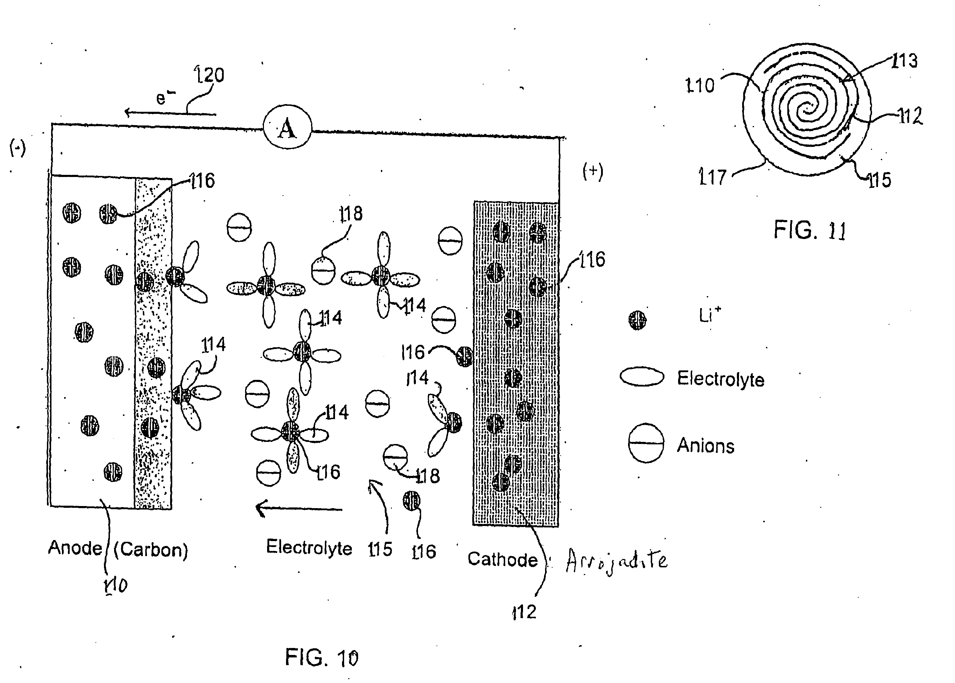

Referring now to Fig. 10 there is shown a diagram showing the basic configuration of an Li-ion battery 100 of a kind used for research. It typically comprises an anode (in this case a lithium anode) 110, a cathode 112, in this case of the material defined in claim 1 of the present application and more specifically with the specific composition set out above for a naturally occurring Arrojadite from the Nickel Plate mine, as described in connection with Figs. 2A to 2E at the start of the specific description of this application, and an electrolyte 114 disposed in the space between the anode 110 and the cathode 112. Present throughout the volume of the electrolyte 115 are also lithium ions 116 shown as circles with a cross in the middle, and anions 118 shown as larger circles with a single line through the middle. When an external circuit is connected to the battery, current flows in the direction opposite to the arrow 120 during discharging and in the direction of the arrow during charging.

The cell of Figs. 10 is accommodated in a casing (not shown).

Alternatively the anode 110 can be made of the material defined in claim 1 of the present application and more specifically with the specific composition set out in the above description the material defined in claim 1 of the present application and more specifically with the specific composition set out above for a naturally occurring Arrojadite from the Nickel Plate mine, as described in connection with Figs. 2A to 2E at the start of the specific description of this application. In this case the cathode 112 could for example consist of carbon.

Reference should now be made to Fig. 11 which shows an alternative layout for a battery where the electrodes 110 and 112 are coiled in a spiral 113 with the electrolyte 115 disposed between them and the structure being encapsulated in a housing 117. Terminals connected to the anode 110 and the cathode 112 are provided at opposite ends of the housing (terminals not shown) in manner known per se. The same layout as shown in and described with reference to Fig. 11 can be used for a supercapacitor.

The materials can be the same as those described with reference to Fig. 10.

In both cases, i.e. the designs of cells using an electrolyte any appropriate electrolyte system can be used for example the so-called soggy sand electrolyte described and claimed in European patent 1505680B1. One example for the preparation of non-aqueous, anhydrous electrolytes given in that European patent is as follows:

The composite electrolyte was prepared in the form of a mixture of fine particles of ceramic oxides ($SiO_2$ $TiO_2$ and $Al_2O_3$, radius : r ~ 0.15 $\mu$m) with a non-aqueous solution of 0.1M $LiClO_4$ in Methanol (MeOH). Although MeOH was selected for this test it is not a preferred solvent for lithium batteries. However, because the method is effective using MeOH it appears certain that it will work better in the preferred solvents, i.e. in a non-aqueous, anhydrous solvent selected from the group comprising DME/EC, DEC/EC, DMC/EC, PC, carbonate based solvents related to any of the foregoing, DMSO, organic sulphur compounds, THF, AN and mixtures of any of the foregoing, and indeed practical tests have confirmed this.

In this example the oxides were dried in vacuum at 250°C for 24 hours prior to composite preparation and all samples were prepared under an Argon atmosphere in a glove box (closed container with a window and gloves for handling the materials involved). Room temperature conductivity was measured for various volume fractions using impedance spectroscopy with the samples placed between two parallel stainless steel electrodes of a home-built cell (samples loaded under Argon). The impurity effects were excluded by pre-washing the oxides in the liquid solvents. The conductivity was better than $2 \cdot 10^{-3}$ S/cm.

When used in a lithium ion battery an electrolyte of this kind does not require a separator.

Other conventional electrolytes which are well known per se can also be used. However, such other electrolytes generally require a suitable separator and these are well known per se.

The material of the present invention is also particularly suited for use as a separator, for example in a molten salt cell such as the Zebra cell. This is a battery with a positive electrode of nickel in the discharged state and nickel chloride in the charged state. The negative electrode is molten sodium. The electrolyte is molten chloroaluminate ($NaAlCl_4$). In this case a separator based on the material claimed here is used instead of the traditional sodium conducting β-alumina ceramic separator and the open elongate channels in the separator of the present teaching serve for the transport of sodium ions during charging and discharging of the battery.

For a more complete description of a Zebra battery reference can be made to the paper by J. L. Sudworth entitled "Zebra batteries" in the Journal of Power Sources, 51 (1994) 105-114, the content of which is incorporated herein by reference.

The precise crystallographical structures for the Arrojadite minerals from the Nickel Plate and Hagendorf mines will now be recited in CIF format.

Crystallographic structure of Arrojadite from the Hagendorf mine in CIF-Format

```
data_publ
_publ_contact_author_name
'Christoph Kallfa\&s'
_publ_contact_author_address
;

;
_publ_contact_author_email
XXX
loop_
_publ_author_name
'Christoph Kallfa\&s'
_publ_author_address
'Stuttgart'

_publ_section_title
;Crystal structure, chemical composition and
thermal behaviour of arrojadite
;

_publ_section_abstract
;
The crystal structure of arrojadite was reexamined and the disorder phe-
nomena were described applying modern X-ray diffraction and refinement
methodson samples from Hagendorf (Germany).The chemical composition of
different arrojadite samples was determined using SEM-EDX, ICP-OES and
ICP-MS, as a result of which a new Sr-rich member  of the dickinsonite-
arrojadite series was identified. It crystallizes in the monoclinic sys-
tem (space group C2/c) with the lattice parametersa = 1663.1(1) pm, b =
1007.4(1) pm, c = 2487.7(1) pm,\b = 105.13(1)\%.  The thermal decomposi-
tion processes under various conditions have been studied by in-situ syn-
chrotron powder diffraction experiments, and by simultaneous thermo ana-
lytical and mass-spectrometrical measurements.;

_publ_section_references
; IPDS2 (X-AREA Version 1.35, Stoe et Cie. 2006),
   PLATON (Spek 2006),
   SHELXL97/SHELXS97 (Sheldrick, 1997)
   JANA2000 (Petricek, Dusek, 2000),
   ENCIFER (Version 1.2, CCDC, 2005),
   OPENDX (Version 4.2.0, odendx.org, 2000),
   DRAWXTL (Version 5.1, Finger, Kroeker, Toby, 2005)
;
_audit_creation_method              JANA2000,ENCIFER
_chemical_name_systematic
'Sodium Strontium Aluminium Chromium Iron Manganese Phosphate Hydrate'
_chemical_name_common               'Arrojadite'
_chemical_formula_moiety            'Al Cr Fe7.25 H2 Mn6 Na3 O50 P12 Sr'
_chemical_formula_sum               'Al Cr Fe7.25 H2 Mn6 Na3 O50 P12 Sr'
_chemical_formula_weight            2143.8
_chemical_compound_source           'Hagendorf (Germany)'
_symmetry_cell_setting              monoclinic
_symmetry_space_group_name_H-M      'C 2/c'
_symmetry_space_group_name_Hall       '-C 2yc'
```

```
_symmetry_int_tables_number        15

loop_
_symmetry_equiv_pos_as_xyz
x,y,z
-x,y,1/2-z
-x,-y,-z
x,-y,1/2+z
1/2+x,1/2+y,z
1/2-x,1/2+y,1/2-z
1/2-x,1/2-y,-z
1/2+x,1/2-y,1/2+z

_cell_length_a                     16.6317(8)
_cell_length_b                     10.0736(6)
_cell_length_c                     24.8765(11)
_cell_angle_alpha                  90
_cell_angle_beta                   105.130(3)
_cell_angle_gamma                  90
_cell_volume                       4023.4(4)
_cell_formula_units_Z              4
_cell_measurement_reflns_used      27679
_cell_measurement_theta_min        3.4
_cell_measurement_theta_max        58.5
_cell_measurement_temperature      293(2)
_exptl_crystal_density_diffrn      3.524
_exptl_crystal_F_000               4106
_exptl_absorpt_coefficient_mu      6.549
_exptl_crystal_description         'xenomorphic fragment'
_exptl_crystal_size_max            0.32
_exptl_crystal_size_mid            0.23
_exptl_crystal_size_min            0.15
_exptl_crystal_colour              'pale green'
_exptl_absorpt_correction_type     multi-scan
_exptl_absorpt_process_details     'SHXABS in PLATON'
_exptl_absorpt_correction_T_min    0.3447
_exptl_absorpt_correction_T_max    0.7663
_diffrn_ambient_temperature        293(2)
_diffrn_radiation_probe            x-ray
_diffrn_radiation_type             'Mo K\a'
_diffrn_radiation_wavelength       0.71069
_diffrn_source                     'fine-focus sealed tube'
_diffrn_radiation_monochromator    graphite
_diffrn_measurement_device_type    'STOE IPDS2'
_diffrn_measurement_method         '\w scan'
_diffrn_reflns_number              19061
_diffrn_reflns_theta_min           1.70
_diffrn_reflns_theta_max           29.24
_diffrn_reflns_theta_full          29.24
_diffrn_measured_fraction_theta_max 0.981
_diffrn_measured_fraction_theta_full 0.981
_diffrn_reflns_av_R_equivalents    0.0220
_diffrn_reflns_av_sigmaI/netI      0.0172
_diffrn_reflns_limit_h_min         -22
_diffrn_reflns_limit_h_max         22
```

```
_diffrn_reflns_limit_k_min        -13
_diffrn_reflns_limit_k_max         13
_diffrn_reflns_limit_l_min        -34
_diffrn_reflns_limit_l_max         31
_refine_special_details
;
```

Refinement of $F^2$ against ALL reflections. The weighted R-factor wR and goodness of fit S are based on $F^2$, conventional R-factors R are basedon F, with F set to zero for negative $F^2$. The threshold expression of $F^2$ > 2 sigma($F^2$) is used only for calculating R-factors(gt) etc. and is not relevant to the choice of reflections for refinement.  R-factors based on $F^2$ are statistically about twice as large as those based on F, and R-factors based on ALL data will be even larger. The anisotropic displacement of the atoms Na(2) and Fe(7) were refined with anharmonic 3rd order tensors. Highest residual electron density peak is in direct vicinity of Fe(7).Structural model includes displacement disorder, mixed and fractional occupation of several sites.;

```
_reflns_number_total              5371
_reflns_number_gt                 4838
_reflns_threshold_expression      I>2\s(I)
_refine_ls_structure_factor_coef  Fsqd
_refine_ls_R_factor_gt            0.0378
_refine_ls_wR_factor_gt           0.0447
_refine_ls_R_factor_all           0.0498
_refine_ls_wR_factor_ref          0.0872
_refine_ls_goodness_of_fit_ref    1.044
_refine_ls_number_reflns          14879
_refine_ls_number_parameters      413
_refine_ls_number_restraints      4
_refine_ls_number_constraints     0
_refine_ls_weighting_scheme       sigma
_refine_ls_weighting_details      w=1/\s^2^(I)
_refine_ls_hydrogen_treatment     undef
_refine_ls_shift/su_max           0.0009
_refine_ls_shift/su_mean          0.0000
_refine_diff_density_max          5.12
_refine_diff_density_min          -1.54
_refine_diff_density_rms          0.196
_refine_ls_extinction_method
'B-C type 1 Gaussian isotropic (Becker & Coppens, 1974)'
_refine_ls_extinction_coef        0.003529

loop_
_atom_type_symbol
_atom_type_scat_dispersion_real
_atom_type_scat_dispersion_imag
_atom_type_scat_source
_atom_type_scat_Cromer_Mann_a1
_atom_type_scat_Cromer_Mann_b1
_atom_type_scat_Cromer_Mann_a2
_atom_type_scat_Cromer_Mann_b2
_atom_type_scat_Cromer_Mann_a3
_atom_type_scat_Cromer_Mann_b3
_atom_type_scat_Cromer_Mann_a4
```

```
_atom_type_scat_Cromer_Mann_b4
_atom_type_scat_Cromer_Mann_c
O 0.011 0.006 'International Tables Vol C Tables  4.2.6.8 and 6.1.1.4'
3.0485 13.2771 2.2868 5.7011 1.5463 0.3239 0.867 32.908901 0.2508
Na 0.036 0.025 'International Tables Vol C Tables  4.2.6.8 and 6.1.1.4'
4.7626 3.285 3.1736 8.8422 1.2674 0.3136 1.1128 129.423996 0.676
Al 0.064 0.051 'International Tables Vol C Tables  4.2.6.8 and 6.1.1.4'
6.4202 3.0387 1.9002 0.7426 1.5936 31.547199 1.9646 85.0886 1.1151
P 0.102 0.094 'International Tables Vol C Tables  4.2.6.8 and 6.1.1.4'
6.4345 1.9067 4.1791 27.157 1.78 0.526 1.4908 68.164497 1.1149
K 0.201 0.249 'International Tables Vol C Tables  4.2.6.8 and 6.1.1.4'
8.2186 12.7949 7.4398 0.7748 1.0519 213.186996 0.8659 41.684101 1.4228
Ca 0.226 0.306 'International Tables Vol C Tables  4.2.6.8 and 6.1.1.4'
8.6266 10.4421 7.3873 0.6599 1.5899 85.748398 1.0211 178.436996 1.3751
Mn 0.337 0.728 'International Tables Vol C Tables  4.2.6.8 and 6.1.1.4'
11.2819 5.3409 7.3573 0.3432 3.0193 17.867399 2.2441 83.754303 1.0896
Fe 0.346 0.844 'International Tables Vol C Tables  4.2.6.8 and 6.1.1.4'
11.7695 4.7611 7.3573 0.3072 3.5222 15.3535 2.3045 76.880501 1.0369
Mg 0.049 0.036 'International Tables Vol C Tables  4.2.6.8 and 6.1.1.4'
5.4204 2.8275 2.1735 79.261101 1.2269 0.3808 2.3073 7.1937 0.8584
Sr -1.531 3.250 'International Tables Vol C Tables  4.2.6.8 and 6.1.1.4'
17.566299 1.5564 9.8184 14.0988 5.422 0.1664 2.6694 132.376007 2.5064
Cr 0.321 0.624 'International Tables Vol C Tables  4.2.6.8 and 6.1.1.4'
10.6406 6.1038 7.3537 0.392 3.324 20.2626 1.4922 98.739899 1.1832

_computing_data_collection          'IPDS2'
_computing_cell_refinement          'IPDS2'
_computing_data_reduction           'IPDS2'
_computing_structure_refinement     'JANA2000'
_computing_molecular_graphics       'DRAWXTL,OPENDX'
_computing_publication_material     'JANA2000,ENCIFER'

loop_
_atom_site_label
_atom_site_type_symbol
_atom_site_adp_type
_atom_site_fract_x
_atom_site_fract_y
_atom_site_fract_z
_atom_site_U_iso_or_equiv
_atom_site_symmetry_multiplicity
_atom_site_occupancy
_atom_site_calc_flag
_atom_site_refinement_flags
_atom_site_disorder_assembly
_atom_site_disorder_group
Na1 Na Uani 0 0 0 0.0270(5) 4 1 d . . .
Na2 Na Uani 0.1382(2) 0.4826(3) 0.1186(1) 0.0516(6) 8 1 d . . .
Sr1 Sr Uani 0 0.50115(5) 0.25 0.0305(1) 4 1 d . . .
Mn1 Mn Uani 0.20589(2) 0.30006(4) 0.35184(2) 0.0101(1) 8 1 d . . .
Mn2 Mn Uani 0.28095(2) 0.20899(4) 0.15755(2) 0.0108(1) 8 1 d . . .
Mn3 Mn Uani 0.28725(2) 0.49137(4) 0.23317(2) 0.0115(1) 8 1 d . . .
Fe4 Fe Uani 0.10404(2) 0.01380(4) 0.64052(2) 0.0107(1) 8 1 d . . .
Fe5 Fe Uani 0.03462(2) 0.25693(4) 0.39971(2) 0.0102(1) 8 1 d . . .
Fe6 Fe Uani 0.47873(2) 0.24893(4) 0.09742(2) 0.0119(1) 8 1 d . . .
```

```
Fe7 Fe Uani 0.22009(9) 0.0973(2) 0.47426(8) 0.0403(4) 8 0.625(2) d . . .
Al1 Al Uani 0 0.5 0 0.0056(3) 4 1 d . . .
Cr1 Cr Uani 0.26961(5) 0.28348(9) 0.01665(5) 0.0236(3) 8 0.5 d . . .
P1 P Uani 0.12513(4) 0.25097(6) 0.53813(3) 0.0071(2) 8 1 d . . .
P2 P Uani 0.12604(4) 0.27936(6) 0.21340(3) 0.0075(2) 8 1 d . . .
P3 P Uani 0.35867(4) 0.19936(6) 0.29485(3) 0.0104(2) 8 1 d . . .
P4 P Uani 0.10287(4) 0.23396(6) 0.04790(3) 0.0077(2) 8 1 d . . .
P5 P Uani 0.36905(4) 0.03500(5) 0.07586(3) 0.0079(2) 8 1 d . . .
P61 P Uani 0.38197(5) 0.4893(1) 0.13076(4) 0.0081(3) 8 0.677(2) d . . .
P62 P Uani 0.0823(1) 0.0059(2) 0.33579(9) 0.0102(7) 8 0.323(2) d . . .
O11 O Uani 0.5935(1) 0.1051(2) 0.03567(8) 0.0097(5) 8 1 d . . .
O12 O Uani 0.0839(1) 0.1670(2) 0.57500(9) 0.0129(6) 8 1 d . . .
O13 O Uani 0.2790(1) 0.2485(2) 0.43822(8) 0.0128(5) 8 1 d . . .
O14 O Uani 0.1066(1) 0.1877(2) 0.47988(8) 0.0138(6) 8 1 d . . .
O21 O Uani 0.1320(1) 0.1260(2) 0.21166(9) 0.0173(6) 8 1 d . . .
O22 O Uani 0.1264(1) 0.3321(2) 0.27106(8) 0.0126(6) 8 1 d . . .
O23 O Uani 0.2016(1) 0.3370(2) 0.19524(9) 0.0132(6) 8 1 d . . .
O24 O Uani 0.0453(1) 0.3290(2) 0.17268(9) 0.0138(6) 8 1 d . . .
O31 O Uani 0.2847(1) 0.1483(2) 0.31706(9) 0.0172(6) 8 1 d . . .
O32 O Uani 0.3546(1) 0.3523(2) 0.29380(9) 0.0138(6) 8 1 d . . .
O33 O Uani 0.3512(1) 0.1408(2) 0.23677(9) 0.0248(7) 8 1 d . . .
O34 O Uani 0.4414(1) 0.1508(2) 0.33334(9) 0.0179(6) 8 1 d . . .
O41 O Uani 0.4032(1) 0.3155(2) 0.01104(8) 0.0139(6) 8 1 d . . .
O42 O Uani 0.1936(1) 0.2671(2) 0.07717(8) 0.0147(6) 8 1 d . . .
O43 O Uani 0.0469(1) 0.3581(2) 0.04819(7) 0.0078(5) 8 1 d . . .
O44 O Uani 0.0654(1) 0.1308(2) 0.08046(8) 0.0119(6) 8 1 d . . .
O51 O Uani 0.2893(1) 0.0431(2) 0.02857(8) 0.0213(6) 8 1 d . . .
O52 O Uani 0.3714(1) 0.1553(2) 0.11515(8) 0.0145(6) 8 1 d . . .
O53 O Uani 0.4483(1) 0.0560(2) 0.05491(8) 0.0086(5) 8 1 d . . .
O54 O Uani 0.1231(1) 0.4027(2) 0.39283(9) 0.0156(6) 8 1 d . . .
O61 O Uani 0.4714(1) 0.4381(2) 0.13107(8) 0.0139(6) 8 1 d . . .
O62 O Uani 0.1141(1) 0.1392(2) 0.36282(8) 0.0129(6) 8 1 d . . .
O63 O Uani 0.3506(1) 0.4187(2) 0.1748(1) 0.0222(7) 8 1 d . . .
O614 O Uani 0.3175(2) 0.4566(3) 0.0756(1) 0.0216(9) 8 0.677(2) d . . .
O624 O Uani 0.0164(3) 0.0279(5) 0.2659(3) 0.0216(9) 8 0.323(2) d . . .
O7 O Uani 0.23118(8) -0.0003(2) 0.14090(7) 0.0137(5) 8 1 d . . .

loop_
_atom_site_aniso_label
_atom_site_aniso_type_symbol
_atom_site_aniso_U_11
_atom_site_aniso_U_22
_atom_site_aniso_U_33
_atom_site_aniso_U_12
_atom_site_aniso_U_13
_atom_site_aniso_U_23
Na1 Na 0.0316(8) 0.0151(7) 0.0241(9) -0.0038(8) -0.0109(7) -0.0029(8)
Na2 Na 0.097(1) 0.0157(6) 0.0182(6) -0.0079(8) -0.0279(8) 0.0014(6)
Sr1 Sr 0.0173(2) 0.0233(2) 0.0564(3) 0 0.0196(2) 0
Mn1 Mn 0.0099(2) 0.0119(2) 0.0078(2) 0.0006(1) 0.0013(2) -0.0002(2)
Mn2 Mn 0.0095(2) 0.0139(2) 0.0089(2) 0.0029(1) 0.0023(2) -0.0009(2)
Mn3 Mn 0.0134(2) 0.0090(2) 0.0096(2) -0.0000(2) -0.0014(1) 0.0000(2)
Fe4 Fe 0.0109(1) 0.0100(2) 0.0100(2) 0.0004(1) 0.0007(1) -0.0012(2)
Fe5 Fe 0.0077(2) 0.0127(2) 0.0095(2) 0.0003(1) 0.0010(2) 0.0004(2)
Fe6 Fe 0.0117(2) 0.0108(2) 0.0140(2) -0.0028(1) 0.0046(2) -0.0023(2)
```

```
Fe7 Fe 0.0223(5) 0.0597(8) 0.0465(7) 0.0257(4) 0.0228(4) 0.0403(6)
Al1 Al 0.0063(4) 0.0054(4) 0.0051(5) -0.0010(4) 0.0014(3) -0.0007(4)
Cr1 Cr 0.0213(5) 0.0254(5) 0.0313(6) 0.0120(4) 0.0196(4) 0.0147(4)
P1 P 0.0070(3) 0.0070(3) 0.0074(3) 0.0017(2) 0.0017(2) 0.0014(2)
P2 P 0.0081(3) 0.0071(3) 0.0064(3) -0.0003(2) 0.0004(3) 0.0001(2)
P3 P 0.0129(3) 0.0075(3) 0.0081(3) 0.0023(2) -0.0024(3) -0.0007(3)
P4 P 0.0071(3) 0.0077(3) 0.0074(3) 0.0008(2) 0.0004(2) 0.0019(2)
P5 P 0.0071(2) 0.0094(3) 0.0077(3) -0.0010(2) 0.0026(2) -0.0014(2)
P61 P 0.0075(4) 0.0083(4) 0.0088(6) 0.0000(3) 0.0026(4) 0.0007(4)
P62 P 0.0122(10) 0.0062(8) 0.013(1) -0.0018(8) 0.006(1) 0.0005(9)
O11 O 0.0087(8) 0.0103(8) 0.0083(9) -0.0027(6) -0.0008(7) -0.0001(7)
O12 O 0.0100(8) 0.0118(9) 0.018(1) -0.0003(6) 0.0051(8) 0.0050(7)
O13 O 0.0071(7) 0.0166(8) 0.013(1) 0.0016(7) 0.0000(7) 0.0024(7)
O14 O 0.0140(9) 0.0179(9) 0.008(1) 0.0049(7) 0.0003(8) -0.0033(8)
O21 O 0.025(1) 0.0073(9) 0.014(1) 0.0039(7) -0.0047(9) 0.0014(7)
O22 O 0.0160(9) 0.0137(9) 0.007(1) 0.0012(7) 0.0014(8) 0.0000(7)
O23 O 0.0102(8) 0.0165(9) 0.014(1) 0.0000(7) 0.0060(8) 0.0001(7)
O24 O 0.0091(8) 0.0167(9) 0.013(1) 0.0027(7) -0.0017(8) -0.0005(7)
O31 O 0.0132(9) 0.0165(9) 0.019(1) -0.0014(7) -0.0007(9) 0.0017(8)
O32 O 0.0197(9) 0.0089(8) 0.009(1) 0.0016(7) -0.0026(8) -0.0005(7)
O33 O 0.036(1) 0.021(1) 0.012(1) 0.0128(9) -0.0047(10) -0.0079(8)
O34 O 0.0169(9) 0.0144(9) 0.017(1) 0.0053(7) -0.0049(9) -0.0021(8)
O41 O 0.0181(9) 0.0143(9) 0.009(1) 0.0029(7) 0.0031(8) -0.0004(7)
O42 O 0.0068(7) 0.0206(9) 0.014(1) 0.0002(7) -0.0023(7) 0.0025(8)
O43 O 0.0102(8) 0.0070(7) 0.0073(9) 0.0009(6) 0.0041(7) 0.0003(6)
O44 O 0.0126(8) 0.0082(8) 0.014(1) -0.0008(6) 0.0021(8) 0.0023(7)
O51 O 0.0094(8) 0.042(1) 0.009(1) 0.0014(7) -0.0041(8) -0.0045(8)
O52 O 0.0163(9) 0.0133(9) 0.017(1) -0.0031(7) 0.0098(8) -0.0062(7)
O53 O 0.0089(7) 0.0089(7) 0.0101(9) 0.0001(6) 0.0061(7) -0.0004(6)
O54 O 0.0152(9) 0.0096(8) 0.026(1) -0.0003(7) 0.0130(9) -0.0045(8)
O61 O 0.0108(8) 0.0110(8) 0.021(1) 0.0001(6) 0.0068(8) -0.0027(7)
O62 O 0.0123(8) 0.0113(8) 0.016(1) -0.0012(6) 0.0054(8) -0.0029(7)
O63 O 0.027(1) 0.0140(9) 0.032(1) 0.0006(8) 0.018(1) 0.0025(8)
O614 O 0.016(1) 0.022(1) 0.029(2) 0.004(1) 0.009(1) 0.006(1)
O624 O 0.016(1) 0.022(1) 0.029(2) 0.004(1) 0.009(1) 0.006(1)
O7 O 0.0062(6) 0.0095(7) 0.026(1) -0.0002(7) 0.0054(6) 0.0004(9)

loop_
_geom_bond_atom_site_label_1
_geom_bond_atom_site_label_2
_geom_bond_site_symmetry_1
_geom_bond_site_symmetry_2
_geom_bond_distance
_geom_bond_publ_flag
Na1 O12 . 2_555 2.627(2) no
Na1 O12 . 4_554 2.627(2) no
Na1 O14 . 2_555 2.726(2) no
Na1 O14 . 4_554 2.726(2) no
Na1 O41 . 5_445 2.521(2) no
Na1 O41 . 7_555 2.521(2) no
Na1 O44 . . 2.406(2) no
Na1 O44 . 3_555 2.406(2) no
Na2 O11 . 5_455 2.352(3) no
Na2 O23 . . 2.418(3) no
Na2 O24 . . 2.771(4) no
```

```
Na2 O31 . 6_555 2.434(3) no
Na2 O34 . 6_555 2.624(4) no
Na2 O42 . . 2.668(4) no
Na2 O43 . . 2.357(3) no
Sr1 O22 . . 2.649(2) no
Sr1 O22 . 2_555 2.649(2) no
Sr1 O24 . . 2.834(2) no
Sr1 O24 . 2_555 2.834(2) no
Sr1 O33 . 5_455 2.793(2) no
Sr1 O33 . 6_555 2.793(2) no
Sr1 O34 . 5_455 2.928(2) no
Sr1 O34 . 6_555 2.928(2) no
Mn1 O13 . . 2.237(2) no
Mn1 O22 . . 2.122(2) no
Mn1 O31 . . 2.323(2) no
Mn1 O54 . . 2.177(2) no
Mn1 O62 . . 2.291(2) no
Mn1 O7 . 6_555 2.253(2) no
Mn2 O23 . . 2.221(2) no
Mn2 O33 . . 2.125(2) no
Mn2 O42 . . 2.221(2) no
Mn2 O52 . . 2.121(2) no
Mn2 O63 . . 2.394(2) no
Mn2 O7 . . 2.263(2) no
Mn3 O21 . 6_555 2.137(2) no
Mn3 O23 . . 2.153(2) no
Mn3 O31 . 6_555 2.171(2) no
Mn3 O32 . . 2.148(2) no
Mn3 O63 . . 2.133(2) no
Fe4 O12 . . 2.206(2) no
Fe4 O21 . 4_555 2.214(2) no
Fe4 O32 . 7_556 2.092(2) no
Fe4 O44 . 4_555 2.065(2) no
Fe4 O61 . 8_455 2.210(2) no
Fe4 O7 . 4_555 2.116(2) no
Fe5 O14 . . 2.156(2) no
Fe5 O24 . 2_555 2.071(2) no
Fe5 O43 . 2_555 2.340(2) no
Fe5 O44 . 2_555 2.249(2) no
Fe5 O54 . . 2.117(2) no
Fe5 O62 . . 2.152(2) no
Fe6 O12 . 8_554 2.144(2) no
Fe6 O34 . 2_655 2.124(2) no
Fe6 O41 . . 2.288(2) no
Fe6 O52 . . 2.163(2) no
Fe6 O53 . . 2.208(2) no
Fe6 O61 . . 2.097(2) no
Fe7 O13 . . 2.131(3) no
Fe7 O13 . 7_556 2.671(3) no
Fe7 O14 . . 2.133(3) no
Fe7 O51 . 4_555 2.084(2) no
Fe7 O62 . . 2.901(2) no
Fe7 O614 . 6_545 1.879(3) no
Al1 O11 . 5_455 1.898(2) no
Al1 O11 . 7_555 1.898(2) no
```

```
Al1 O43 . . 1.898(2) no
Al1 O43 . 3_565 1.898(2) no
Al1 O53 . 5_455 1.881(2) no
Al1 O53 . 7_555 1.881(2) no
Cr1 Cr1 . 7_555 1.134(1) no
Cr1 O41 . . 2.285(2) no
Cr1 O41 . 7_555 2.948(2) no
Cr1 O42 . . 2.210(2) no
Cr1 O42 . 7_555 2.613(2) no
Cr1 O51 . . 2.451(2) no
Cr1 O51 . 7_555 2.169(2) no
Cr1 O52 . . 2.893(2) no
Cr1 O614 . . 2.284(3) no
P1 O11 . 8_455 1.539(2) no
P1 O12 . . 1.535(2) no
P1 O13 . 7_556 1.549(2) no
P1 O14 . . 1.539(2) no
P2 O21 . . 1.549(2) no
P2 O22 . . 1.528(2) no
P2 O23 . . 1.554(2) no
P2 O24 . . 1.539(2) no
P3 O31 . . 1.561(2) no
P3 O32 . . 1.542(2) no
P3 O33 . . 1.535(2) no
P3 O34 . . 1.537(2) no
P4 O41 . 7_555 1.527(2) no
P4 O42 . . 1.532(2) no
P4 O43 . . 1.560(2) no
P4 O44 . . 1.545(2) no
P5 O51 . . 1.528(2) no
P5 O52 . . 1.551(2) no
P5 O53 . . 1.553(2) no
P5 O54 . 6_545 1.532(2) no
P61 P62 . 6_555 0.903(2) no
P61 O61 . . 1.573(2) no
P61 O62 . 6_555 1.5176(19) no
P61 O63 . . 1.509(3) no
P61 O614 . . 1.541(3) no
P62 O61 . 6_545 1.526(3) no
P62 O62 . . 1.533(3) no
P62 O63 . 6_545 1.497(3) no
P62 O624 . . 1.811(6) no
O624 O624 . 2_555 0.834(8) no

loop_
_geom_angle_atom_site_label_1
_geom_angle_atom_site_label_2
_geom_angle_atom_site_label_3
_geom_angle_site_symmetry_1
_geom_angle_site_symmetry_2
_geom_angle_site_symmetry_3
_geom_angle
_geom_angle_publ_flag
O12 Na1 O12 2_555 . 4_554 180 no
O12 Na1 O14 2_555 . 2_555 55.66(6) no
```

```
O12 Na1 O14 2_555 . 4_554 124.34(6) no
O12 Na1 O41 2_555 . 5_445 108.28(5) no
O12 Na1 O41 2_555 . 7_555 71.72(5) no
O12 Na1 O44 2_555 . . 106.35(5) no
O12 Na1 O44 2_555 . 3_555 73.65(5) no
O12 Na1 O12 4_554 . 2_555 180 no
O12 Na1 O14 4_554 . 2_555 124.34(6) no
O12 Na1 O14 4_554 . 4_554 55.66(6) no
O12 Na1 O41 4_554 . 5_445 71.72(5) no
O12 Na1 O41 4_554 . 7_555 108.28(5) no
O12 Na1 O44 4_554 . . 73.65(5) no
O12 Na1 O44 4_554 . 3_555 106.35(5) no
O14 Na1 O14 2_555 . 4_554 180 no
O14 Na1 O41 2_555 . 5_445 91.54(6) no
O14 Na1 O41 2_555 . 7_555 88.46(6) no
O14 Na1 O44 2_555 . . 69.03(5) no
O14 Na1 O44 2_555 . 3_555 110.97(5) no
O14 Na1 O14 4_554 . 2_555 180 no
O14 Na1 O41 4_554 . 5_445 88.46(6) no
O14 Na1 O41 4_554 . 7_555 91.54(6) no
O14 Na1 O44 4_554 . . 110.97(5) no
O14 Na1 O44 4_554 . 3_555 69.03(5) no
O41 Na1 O41 5_445 . 7_555 180 no
O41 Na1 O44 5_445 . . 118.43(7) no
O41 Na1 O44 5_445 . 3_555 61.57(7) no
O41 Na1 O41 7_555 . 5_445 180 no
O41 Na1 O44 7_555 . . 61.57(7) no
O41 Na1 O44 7_555 . 3_555 118.43(7) no
O44 Na1 O44 . . 3_555 180 no
O44 Na1 O44 3_555 . . 180 no
O11 Na2 O23 5_455 . . 169.4(2) no
O11 Na2 O24 5_455 . . 129.1(1) no
O11 Na2 O31 5_455 . 6_555 102.1(1) no
O11 Na2 O34 5_455 . 6_555 88.8(1) no
O11 Na2 O42 5_455 . . 98.7(1) no
O11 Na2 O43 5_455 . . 68.44(9) no
O23 Na2 O24 . . . 57.45(8) no
O23 Na2 O31 . . 6_555 81.4(1) no
O23 Na2 O34 . . 6_555 101.5(1) no
O23 Na2 O42 . . . 71.8(1) no
O23 Na2 O43 . . . 109.1(1) no
O24 Na2 O31 . . 6_555 109.2(1) no
O24 Na2 O34 . . 6_555 74.2(1) no
O24 Na2 O42 . . . 91.5(1) no
O24 Na2 O43 . . . 74.4(1) no
O31 Na2 O34 6_555 . 6_555 59.92(9) no
O31 Na2 O42 6_555 . . 129.5(1) no
O31 Na2 O43 6_555 . . 168.6(1) no
O34 Na2 O42 6_555 . . 165.5(2) no
O34 Na2 O43 6_555 . . 112.2(1) no
O42 Na2 O43 . . . 60.06(8) no
O22 Sr1 O22 . . 2_555 99.98(5) no
O22 Sr1 O24 . . . 53.35(5) no
O22 Sr1 O24 . . 2_555 79.05(6) no
O22 Sr1 O33 . . 5_455 168.74(6) no
```

```
O22 Sr1 O33 . . 6_555 70.54(6) no
O22 Sr1 O34 . . 5_455 125.75(5) no
O22 Sr1 O34 . . 6_555 94.46(6) no
O22 Sr1 O22 2_555 . . 99.98(5) no
O22 Sr1 O24 2_555 . . 79.05(6) no
O22 Sr1 O24 2_555 . 2_555 53.35(5) no
O22 Sr1 O33 2_555 . 5_455 70.54(6) no
O22 Sr1 O33 2_555 . 6_555 168.74(6) no
O22 Sr1 O34 2_555 . 5_455 94.46(6) no
O22 Sr1 O34 2_555 . 6_555 125.75(5) no
O24 Sr1 O24 . . 2_555 104.54(6) no
O24 Sr1 O33 . . 5_455 127.81(5) no
O24 Sr1 O33 . . 6_555 90.19(6) no
O24 Sr1 O34 . . 5_455 172.81(6) no
O24 Sr1 O34 . . 6_555 68.78(5) no
O24 Sr1 O24 2_555 . . 104.54(6) no
O24 Sr1 O33 2_555 . 5_455 90.19(6) no
O24 Sr1 O33 2_555 . 6_555 127.81(5) no
O24 Sr1 O34 2_555 . 5_455 68.78(5) no
O24 Sr1 O34 2_555 . 6_555 172.81(6) no
O33 Sr1 O33 5_455 . 6_555 119.51(6) no
O33 Sr1 O34 5_455 . 5_555 51.34(6) no
O33 Sr1 O34 5_455 . 6_555 96.08(6) no
O33 Sr1 O33 6_555 . 5_455 119.51(6) no
O33 Sr1 O34 6_555 . 5_455 96.08(6) no
O33 Sr1 O34 6_555 . 6_555 51.34(6) no
O34 Sr1 O34 5_455 . 6_555 118.02(6) no
O34 Sr1 O34 6_555 . 5_455 118.02(6) no
O13 Mn1 O22 . . . 173.32(7) no
O13 Mn1 O31 . . . 89.24(7) no
O13 Mn1 O54 . . . 84.96(7) no
O13 Mn1 O62 . . . 86.16(6) no
O13 Mn1 O7 . . 6_555 90.33(6) no
O22 Mn1 O31 . . . 91.17(7) no
O22 Mn1 O54 . . . 93.27(7) no
O22 Mn1 O62 . . . 87.16(7) no
O22 Mn1 O7 . . 6_555 95.85(6) no
O31 Mn1 O54 . . . 167.06(7) no
O31 Mn1 O62 . . . 92.13(7) no
O31 Mn1 O7 . . 6_555 108.77(6) no
O54 Mn1 O62 . . . 75.97(7) no
O54 Mn1 O7 . . 6_555 82.87(6) no
O62 Mn1 O7 . . 6_555 158.78(7) no
O23 Mn2 O33 . . . 92.24(8) no
O23 Mn2 O42 . . . 84.60(7) no
O23 Mn2 O52 . . . 159.26(7) no
O23 Mn2 O63 . . . 74.02(7) no
O23 Mn2 O7 . . . 112.89(6) no
O33 Mn2 O42 . . . 172.56(8) no
O33 Mn2 O52 . . . 95.16(8) no
O33 Mn2 O63 . . . 89.77(7) no
O33 Mn2 O7 . . . 87.39(7) no
O42 Mn2 O52 . . . 90.09(7) no
O42 Mn2 O63 . . . 95.80(7) no
O42 Mn2 O7 . . . 87.64(6) no
```

```
O52 Mn2 O63 . . . 86.64(7) no
O52 Mn2 O7 . . . 86.83(6) no
O63 Mn2 O7 . . . 172.62(6) no
O21 Mn3 O23 6_555 . . 166.66(9) no
O21 Mn3 O31 6_555 . 6_555 93.85(7) no
O21 Mn3 O32 6_555 . . 80.67(7) no
O21 Mn3 O63 6_555 . . 108.39(8) no
O23 Mn3 O31 . . 6_555 94.08(7) no
O23 Mn3 O32 . . . 90.06(7) no
O23 Mn3 O63 . . . 80.92(8) no
O31 Mn3 O32 6_555 . . 171.00(8) no
O31 Mn3 O63 6_555 . . 98.88(8) no
O32 Mn3 O63 . . . 89.65(8) no
O12 Fe4 O21 . . 4_555 174.49(6) no
O12 Fe4 O32 . . 7_556 94.67(7) no
O12 Fe4 O44 . . 4_555 90.01(7) no
O12 Fe4 O61 . . 8_455 79.22(7) no
O12 Fe4 O7 . . 4_555 90.42(7) no
O21 Fe4 O32 4_555 . 7_556 80.11(7) no
O21 Fe4 O44 4_555 . 4_555 95.19(7) no
O21 Fe4 O61 4_555 . 8_455 102.72(7) no
O21 Fe4 O7 4_555 . 4_555 87.37(7) no
O32 Fe4 O44 7_556 . 4_555 175.30(7) no
O32 Fe4 O61 7_556 . 8_455 93.26(7) no
O32 Fe4 O7 7_556 . 4_555 85.05(7) no
O44 Fe4 O61 4_555 . 8_455 87.97(7) no
O44 Fe4 O7 4_555 . 4_555 94.56(7) no
O61 Fe4 O7 8_455 . 4_555 169.35(7) no
O14 Fe5 O24 . . 2_555 173.24(8) no
O14 Fe5 O43 . . 2_555 83.71(7) no
O14 Fe5 O44 . . 2_555 83.00(7) no
O14 Fe5 O54 . . . 93.99(7) no
O14 Fe5 O62 . . . 87.81(7) no
O24 Fe5 O43 2_555 . 2_555 89.75(7) no
O24 Fe5 O44 2_555 . 2_555 92.57(7) no
O24 Fe5 O54 2_555 . . 89.34(7) no
O24 Fe5 O62 2_555 . . 98.56(8) no
O43 Fe5 O44 2_555 . 2_555 63.62(6) no
O43 Fe5 O54 2_555 . . 104.96(7) no
O43 Fe5 O62 2_555 . . 170.31(6) no
O44 Fe5 O54 2_555 . . 168.39(8) no
O44 Fe5 O62 2_555 . . 110.75(7) no
O54 Fe5 O62 . . . 80.24(7) no
O12 Fe6 O34 8_554 . 2_655 90.87(7) no
O12 Fe6 O41 8_554 . . 85.72(7) no
O12 Fe6 O52 8_554 . . 176.09(8) no
O12 Fe6 O53 8_554 . . 108.90(7) no
O12 Fe6 O61 8_554 . . 83.18(7) no
O34 Fe6 O41 2_655 . . 166.30(8) no
O34 Fe6 O52 2_655 . . 90.35(7) no
O34 Fe6 O53 2_655 . . 89.74(6) no
O34 Fe6 O61 2_655 . . 100.84(7) no
O41 Fe6 O52 . . . 92.24(7) no
O41 Fe6 O53 . . . 78.88(6) no
O41 Fe6 O61 . . . 91.93(7) no
```

```
O52 Fe6 O53 . . . 67.39(7) no
O52 Fe6 O61 . . . 100.24(7) no
O53 Fe6 O61 . . . 163.97(6) no
O13 Fe7 O13 . . 7_556 91.26(8) no
O13 Fe7 O14 . . . 103.58(9) no
O13 Fe7 O51 . . 4_555 121.40(9) no
O13 Fe7 O62 . . . 74.07(7) no
O13 Fe7 O614 . . 6_545 111.8(2) no
O13 Fe7 O13 7_556 . . 91.26(8) no
O13 Fe7 O14 7_556 . . 61.00(7) no
O13 Fe7 O51 7_556 . 4_555 88.95(9) no
O13 Fe7 O62 7_556 . . 124.55(7) no
O13 Fe7 O614 7_556 . 6_545 155.0(1) no
O14 Fe7 O51 . . 4_555 126.6(1) no
O14 Fe7 O62 . . . 70.95(7) no
O14 Fe7 O614 . . 6_545 102.6(1) no
O51 Fe7 O62 4_555 . . 144.4(1) no
O51 Fe7 O614 4_555 . 6_545 87.0(1) no
O62 Fe7 O614 . . 6_545 57.7(1) no
O11 Al1 O11 5_455 . 7_555 180 no
O11 Al1 O43 5_455 . . 88.47(6) no
O11 Al1 O43 5_455 . 3_565 91.53(6) no
O11 Al1 O53 5_455 . 5_455 88.12(7) no
O11 Al1 O53 5_455 . 7_555 91.88(7) no
O11 Al1 O11 7_555 . 5_455 180 no
O11 Al1 O43 7_555 . . 91.53(6) no
O11 Al1 O43 7_555 . 3_565 88.47(6) no
O11 Al1 O53 7_555 . 5_455 91.88(7) no
O11 Al1 O53 7_555 . 7_555 88.12(7) no
O43 Al1 O43 . . 3_565 180 no
O43 Al1 O53 . . 5_455 87.57(7) no
O43 Al1 O53 . . 7_555 92.43(7) no
O43 Al1 O43 3_565 . . 180 no
O43 Al1 O53 3_565 . 5_455 92.43(7) no
O43 Al1 O53 3_565 . 7_555 87.57(7) no
O53 Al1 O53 5_455 . 7_555 180 no
O53 Al1 O53 7_555 . 5_455 180 no
O41 Cr1 O41 . . 7_555 159.60(8) no
O41 Cr1 O42 . . . 142.20(8) no
O41 Cr1 O42 . . 7_555 60.99(6) no
O41 Cr1 O51 . . . 92.60(7) no
O41 Cr1 O51 . . 7_555 99.77(8) no
O41 Cr1 O52 . . . 75.60(7) no
O41 Cr1 O614 . . . 75.51(9) no
O41 Cr1 O41 7_555 . . 159.60(8) no
O41 Cr1 O42 7_555 . . 55.82(6) no
O41 Cr1 O42 7_555 . 7_555 99.57(6) no
O41 Cr1 O51 7_555 . . 77.62(6) no
O41 Cr1 O51 7_555 . 7_555 82.54(6) no
O41 Cr1 O52 7_555 . . 111.49(6) no
O41 Cr1 O614 7_555 . . 124.30(9) no
O42 Cr1 O42 . . 7_555 154.52(7) no
O42 Cr1 O51 . . . 85.77(7) no
O42 Cr1 O51 . . 7_555 98.75(8) no
O42 Cr1 O52 . . . 72.67(6) no
```

```
O42 Cr1 O614 . . . 77.6(1) no
O42 Cr1 O42 7_555 . . 154.52(7) no
O42 Cr1 O51 7_555 . . 81.96(7) no
O42 Cr1 O51 7_555 . 7_555 82.71(7) no
O42 Cr1 O52 7_555 . . 116.60(6) no
O42 Cr1 O614 7_555 . . 126.8(1) no
O51 Cr1 O51 . . 7_555 152.45(7) no
O51 Cr1 O52 . . . 55.01(5) no
O51 Cr1 O614 . . . 131.59(9) no
O51 Cr1 O51 7_555 . . 152.45(7) no
O51 Cr1 O52 7_555 . . 152.15(7) no
O51 Cr1 O614 7_555 . . 75.66(9) no
O52 Cr1 O614 . . . 76.62(8) no
O11 P1 O12 8_455 . . 110.0(1) no
O11 P1 O13 8_455 . 7_556 108.63(9) no
O11 P1 O14 8_455 . . 111.8(1) no
O12 P1 O13 . . 7_556 110.6(1) no
O12 P1 O14 . . . 108.9(1) no
O13 P1 O14 7_556 . . 107.0(1) no
O21 P2 O22 . . . 112.9(1) no
O21 P2 O23 . . . 107.6(1) no
O21 P2 O24 . . . 110.9(1) no
O22 P2 O23 . . . 109.8(1) no
O22 P2 O24 . . . 107.1(1) no
O23 P2 O24 . . . 108.6(1) no
O31 P3 O32 . . . 107.5(1) no
O31 P3 O33 . . . 109.1(1) no
O31 P3 O34 . . . 109.6(1) no
O32 P3 O33 . . . 112.1(1) no
O32 P3 O34 . . . 110.9(1) no
O33 P3 O34 . . . 107.7(1) no
O41 P4 O42 7_555 . . 109.7(1) no
O41 P4 O43 7_555 . . 112.1(1) no
O41 P4 O44 7_555 . . 110.5(1) no
O42 P4 O43 . . . 109.76(9) no
O42 P4 O44 . . . 112.3(1) no
O43 P4 O44 . . . 102.4(1) no
O51 P5 O52 . . . 108.5(1) no
O51 P5 O53 . . . 112.1(1) no
O51 P5 O54 . . 6_545 112.3(1) no
O52 P5 O53 . . . 102.8(1) no
O52 P5 O54 . . 6_545 112.0(1) no
O53 P5 O54 . . 6_545 108.8(1) no
O61 P61 O63 . . . 110.3(1) no
O61 P61 O614 . . . 111.8(2) no
O62 P61 O63 6_555 . . 113.9(1) no
O62 P61 O614 6_555 . . 107.9(1) no
O63 P61 O614 . . . 104.8(2) no
O61 P62 O62 6_545 . . 109.8(2) no
O61 P62 O63 6_545 . 6_545 113.7(2) no
O61 P62 O624 6_545 . . 106.3(2) no
O61 P62 O624 6_545 . 2_555 104.5(2) no
O62 P62 O63 . . 6_545 113.8(2) no
O62 P62 O624 . . . 111.5(2) no
O62 P62 O624 . . 2_555 113.8(2) no
```

```
O63 P62 O624 6_545 . . 101.2(2) no
O63 P62 O624 6_545 . 2_555 100.7(2) no
Mn1 O7 Mn2 6_545 . . 132.60(6) no
Mn1 O7 Fe4 6_545 . 4_554 112.68(8) no
Mn2 O7 Fe4 . . 4_554 112.21(8) no
```

Crystallographic structure of Arrojadite of the Nickle Plate mine in CIF-Format

data_publ

_publ_contact_author_name
'Christoph Kallfa\&s'
_publ_contact_author_address
;
;
_publ_contact_author_email
XXX
loop_
_publ_author_name
'Christoph Kallfa\&s'
_publ_author_address
'Stuttgart'
_publ_section_title
;Crystal structure, chemical composition and
thermal behaviour of arrojadite
;
_publ_section_abstract
;The crystal structure of arrojadite was reexamined and the disorder phe-
nomena were described applying modern X-ray diffraction and refinement
methods on samples from Nickel Plate (USA).The chemical composition of
different arrojadite samples was determined using SEM-EDX, ICP-OES and
ICP-MS. It crystallizes in the monoclinic system (space group C2/c) with
the lattice parameters a = 1664.4(1) pm, b = 1012.4(1) pm, c = 2486.9(1)
pm,\b = 105.838(1)\%. The thermal decomposition processes under various
conditions have been studied by in-situ synchrotron powder diffraction
experiments, and by simultaneous thermoanalytical and mass-
spectrometrical measurements.;

_publ_section_references
; IPDS2 (X-AREA Version 1.35, Stoe et Cie. 2006),
   PLATON (Spek 2006),
   SHELXL97/SHELXS97 (Sheldrick, 1997)
   JANA2000 (Petricek, Dusek, 2000),
   ENCIFER (Version 1.2, CCDC, 2005),
   OPENDX (Version 4.2.0, opendx.org, 2000),
   DRAWXTL (Version 5.1, Finger, Kroeker, Toby, 2005)
;
_audit_creation_method          JANA2000,ENCIFER
_chemical_name_systematic
; Sodium Potassium Aluminium Chromium Iron Manganese Phosphate Hydrate
```

```
;
_chemical_name_common                   'Arrojadite'
_chemical_formula_moiety    ; Al Cr Fe7.53 H2 K1.21 Mn6 Na3 O50 P12;
_chemical_formula_sum
; Al Cr Fe7.53 H2 K1.21 Mn6 Na3 O50 P12
;
_chemical_formula_weight                2119
_chemical_compound_source               'Nickel Plate (USA)'
_symmetry_cell_setting                  monoclinic
_symmetry_space_group_name_H-M          C2/c
_symmetry_space_group_name_Hall         '-C 2yc'
_symmetry_int_tables_number             15
loop_
  _symmetry_equiv_pos_site_id
  _symmetry_equiv_pos_as_xyz
  1    x,y,z
  2    -x,y,1/2-z
  3    -x,-y,-z
  4    x,-y,1/2+z
  5    1/2+x,1/2+y,z
  6    1/2-x,1/2+y,1/2-z
  7    1/2-x,1/2-y,-z
  8    1/2+x,1/2-y,1/2+z
_cell_length_a                          16.644(1)
_cell_length_b                          10.1248(5)
_cell_length_c                          24.869(2)
_cell_angle_alpha                       90
_cell_angle_beta                        105.838(4)
_cell_angle_gamma                       90
_cell_volume                            4031.8(4)
_cell_formula_units_Z                   4
_cell_measurement_reflns_used           32104
_cell_measurement_theta_min             3.4
_cell_measurement_theta_max             59.0
_cell_measurement_temperature           293(2)
_exptl_crystal_density_diffrn           3.487
_exptl_crystal_density_meas             3.560(4)
_exptl_crystal_density_method           'gas pycnometer'
_exptl_crystal_F_000                    4075
_exptl_absorpt_coefficient_mu           5.493
_exptl_crystal_description              'xenomorphic fragment'
_exptl_crystal_size_max                 0.28
_exptl_crystal_size_mid                 0.21
_exptl_crystal_size_min                 0.13
_exptl_crystal_colour                   'pale green'
_exptl_absorpt_correction_type          multi-scan
_exptl_absorpt_process_details          'SHXABS in PLATON'
_exptl_absorpt_correction_T_min         0.234348
_exptl_absorpt_correction_T_max         0.695788
_diffrn_ambient_temperature             293(2)
_diffrn_radiation_probe         x-ray
_diffrn_radiation_type                  'Mo K\a'
_diffrn_radiation_wavelength            0.71069
_diffrn_radiation_source                'fine-focus sealed tube'
 _diffrn_radiation_monochromator        graphite
```

```
_diffrn_measurement_device_type            'STOE IPDS2'
_diffrn_measurement_method                 '\w scan'
_diffrn_reflns_number                      18827
_diffrn_reflns_theta_min                   1.71
_diffrn_reflns_theta_max                   29.49
_diffrn_measured_fraction_theta_max        0.984
_diffrn_measured_fraction_theta_full       0.984
_diffrn_reflns_theta_full                  29.21
_diffrn_reflns_av_R_equivalents            0.0301
_diffrn_reflns_av_sigmaI/netI              0.0222
_diffrn_reflns_limit_h_min                 -22
_diffrn_reflns_limit_h_max                 22
_diffrn_reflns_limit_k_min                 -13
_diffrn_reflns_limit_k_max                 13
_diffrn_reflns_limit_l_min                 -34
_diffrn_reflns_limit_l_max                 34
_refine_special_details
;
```

Refinement of F^2^ against ALL reflections. The weighted R-factor wR and goodness of fit S are based on F^2^, conventional R-factors R are based on F, with F set to zero for negative F^2^. The threshold expression ofF^2^ > 2sigma(F^2^) is used only for calculating R-factors(gt) etc. and is not relevant to the choice of reflections for refinement.  R-factors based on F^2^ are statistically about twice as large as those based on F, and R-factors based on ALL data will be even larger. The anisotropic displacement of the atoms Na(2) and Fe(7) were refined with anharmonic 3rd order tensors. Highest residual electron density peak is in direct vicinity of Fe(7). Structural model includes displacement disorder, mixed and fractional occupation of several sites.;

```
_reflns_number_total                       5379
_reflns_number_gt                          5007
_reflns_threshold_expression               'I>2\s(I)'
_refine_ls_structure_factor_coef           Fsqd
_refine_ls_R_factor_gt                     0.0553
_refine_ls_wR_factor_gt                    0.0871
_refine_ls_R_factor_all                    0.0553
_refine_ls_wR_factor_ref                   0.0871
_refine_ls_goodness_of_fit_ref             1.043
_refine_ls_goodness_of_fit_gt              1.043
_refine_ls_number_reflns                   16456
_refine_ls_number_parameters               417
_refine_ls_number_restraints               4
_refine_ls_number_constraints              0
_refine_ls_weighting_scheme                sigma
_refine_ls_weighting_details               'w=1/\s^2^(I)'
_refine_ls_hydrogen_treatment              undef
_refine_ls_shift/su_max                    0.0005
_refine_ls_shift/su_mean                   0.0000
_refine_diff_density_max                   3.89
_refine_diff_density_min                   -2.86
_refine_diff_density_rms                   0.257
_refine_ls_extinction_method
 'B-C type 1 Gaussian isotropic (Becker & Coppens, 1974)'
_refine_ls_extinction_coef                 0.055(3)
```

```
loop_
 _atom_type_symbol
 _atom_type_scat_dispersion_real
 _atom_type_scat_dispersion_imag
 _atom_type_scat_source
 _atom_type_scat_Cromer_Mann_a1
 _atom_type_scat_Cromer_Mann_b1
 _atom_type_scat_Cromer_Mann_a2
 _atom_type_scat_Cromer_Mann_b2
 _atom_type_scat_Cromer_Mann_a3
 _atom_type_scat_Cromer_Mann_b3
 _atom_type_scat_Cromer_Mann_a4
 _atom_type_scat_Cromer_Mann_b4
 _atom_type_scat_Cromer_Mann_c
Na   0.036   0.025 'International Tables Vol C Tables  4.2.6.8 and
6.1.1.4' 4.7626 3.285 3.1736 8.8422 1.2674 0.3136 1.1128 129.423996 0.676
Mg   0.049   0.036 'International Tables Vol C Tables  4.2.6.8 and
6.1.1.4' 5.4204 2.8275 2.1735 79.261101 1.2269 0.3808 2.3073 7.1937
0.8584
Mn   0.337   0.728 'International Tables Vol C Tables  4.2.6.8 and
6.1.1.4' 11.2819 5.3409 7.3573 0.3432 3.0193 17.867399 2.2441 83.754303
1.0896
Fe   0.346   0.844 'International Tables Vol C Tables  4.2.6.8 and
6.1.1.4' 11.7695 4.7611 7.3573 0.3072 3.5222 15.3535 2.3045 76.880501
1.0369
Al   0.064   0.051 'International Tables Vol C Tables  4.2.6.8 and
6.1.1.4' 6.4202 3.0387 1.9002 0.7426 1.5936 31.547199 1.9646 85.0886
1.1151
Cr   0.321   0.624 'International Tables Vol C Tables  4.2.6.8 and
6.1.1.4' 10.6406 6.1038 7.3537 0.392 3.324 20.2626 1.4922 98.739899
1.1832
P    0.102   0.094 'International Tables Vol C Tables  4.2.6.8 and
6.1.1.4' 6.4345 1.9067 4.1791 27.157 1.78 0.526 1.4908 68.164497 1.1149
O    0.011   0.006 'International Tables Vol C Tables  4.2.6.8 and
6.1.1.4' 3.0485 13.2771 2.2868 5.7011 1.5463 0.3239 0.867 32.908901
0.2508
K    0.201   0.249 'International Tables Vol C Tables  4.2.6.8 and
6.1.1.4' 8.2186 12.7949 7.4398 0.7748 1.0519 213.186996 0.8659 41.684101
1.4228

_computing_data_collection              'IPDS2'
_computing_cell_refinement              'IPDS2'
_computing_data_reduction               'IPDS2'
_computing_structure_solution           'SHELXS97'
_computing_structure_refinement         'JANA2000'
_computing_molecular_graphics           'DRAWXTL,OPENDX'
_computing_publication_material         'JANA2000,ENCIFER'


#===========================================================================

# 9. ATOMIC COORDINATES AND DISPLACEMENT PARAMETERS

loop_
 _atom_site_label
```

```
_atom_site_type_symbol
_atom_site_adp_type
_atom_site_fract_x
_atom_site_fract_y
_atom_site_fract_z
_atom_site_U_iso_or_equiv
_atom_site_symmetry_multiplicity
_atom_site_occupancy
_atom_site_calc_flag
_atom_site_refinement_flags
_atom_site_disorder_assembly
_atom_site_disorder_group
Na1 Na Uani 0 0 0 0.0280(9) 4 1 d . . .
Na2 Na Uani 0.1339(4) 0.4853(5) 0.1194(2) 0.0578(12) 8 1 d . . .
K1 K Uani 0 0.4962(2) 0.25 0.0398(7) 4 1 d . . .
K2 K Uani 0 0.3339(12) 0.25 0.061(5) 4 0.213(9) d . . .
Mn1 Mn Uani 0.20448(4) 0.30069(6) 0.35175(3) 0.0100(2) 8 1 d . . .
Mn2 Mn Uani 0.28068(4) 0.20576(7) 0.15669(3) 0.0127(2) 8 1 d . . .
Mn3 Mn Uani 0.28728(4) 0.49229(7) 0.23232(3) 0.00991(18) 8 1 d . . .
Fe4 Fe Uani 0.10679(4) 0.01421(7) 0.63925(3) 0.0187(2) 8 1 d . . .
Fe5 Fe Uani 0.03349(4) 0.25655(6) 0.40052(3) 0.00841(19) 8 1 d . . .
Fe6 Fe Uani 0.47775(4) 0.25053(6) 0.09635(3) 0.00921(19) 8 1 d . . .
Fe7 Fe Uani 0.21878(14) 0.0953(3) 0.47164(13) 0.0389(6) 8 0.764(4) d .
. .
Al1 Al Uani 0 0.5 0 0.0034(4) 4 1 d . . .
Cr1 Cr Uani 0.26856(10) 0.27854(15) 0.01563(8) 0.0243(7) 8 0.5 d . . .
P1 P Uani 0.12588(6) 0.25146(10) 0.53842(5) 0.0050(3) 8 1 d . . .
P2 P Uani 0.13043(7) 0.27542(10) 0.21144(5) 0.0072(3) 8 1 d . . .
P3 P Uani 0.35711(7) 0.20346(10) 0.29534(5) 0.0091(3) 8 1 d . . .
P4 P Uani 0.10272(7) 0.23279(10) 0.04721(5) 0.0060(3) 8 1 d . . .
P5 P Uani 0.36993(7) 0.03318(9) 0.07556(5) 0.0066(3) 8 1 d . . .
P61 P Uani 0.38530(12) 0.49081(19) 0.13219(10) 0.0056(6) 8 0.642(5) d .
. .
P62 P Uani 0.0818(3) 0.0059(4) 0.3372(2) 0.0179(15) 8 0.358(5) d . . .
O11 O Uani 0.59467(17) 0.1048(3) 0.03610(13) 0.0075(9) 8 1 d . . .
O12 O Uani 0.08478(18) 0.1666(3) 0.57459(13) 0.0099(10) 8 1 d . . .
O13 O Uani 0.27815(17) 0.2480(3) 0.43761(13) 0.0115(9) 8 1 d . . .
O14 O Uani 0.10697(19) 0.1899(3) 0.47949(13) 0.0131(10) 8 1 d . . .
O21 O Uani 0.1397(2) 0.1244(3) 0.20834(16) 0.0226(13) 8 1 d . . .
O22 O Uani 0.1315(2) 0.3204(3) 0.27000(14) 0.0173(11) 8 1 d . . .
O23 O Uani 0.20429(19) 0.3399(3) 0.19366(15) 0.0150(11) 8 1 d . . .
O24 O Uani 0.0488(2) 0.3205(3) 0.17050(15) 0.0167(11) 8 1 d . . .
O31 O Uani 0.2852(2) 0.1462(3) 0.31799(16) 0.0184(11) 8 1 d . . .
O32 O Uani 0.3501(2) 0.3556(3) 0.29500(15) 0.0144(11) 8 1 d . . .
O33 O Uani 0.3486(3) 0.1506(3) 0.23673(16) 0.0307(13) 8 1 d . . .
O34 O Uani 0.4418(2) 0.1610(3) 0.33473(15) 0.0146(11) 8 1 d . . .
O41 O Uani 0.4035(2) 0.3137(3) 0.01237(13) 0.0121(10) 8 1 d . . .
O42 O Uani 0.19365(17) 0.2637(3) 0.07686(14) 0.0147(10) 8 1 d . . .
O43 O Uani 0.04673(18) 0.3575(2) 0.04795(12) 0.0086(9) 8 1 d . . .
O44 O Uani 0.06634(19) 0.1288(3) 0.07952(13) 0.0110(10) 8 1 d . . .
O51 O Uani 0.29017(19) 0.0378(3) 0.02677(14) 0.0189(11) 8 1 d . . .
O52 O Uani 0.37140(19) 0.1551(3) 0.11369(14) 0.0134(11) 8 1 d . . .
O53 O Uani 0.44968(16) 0.0560(2) 0.05526(12) 0.0070(9) 8 1 d . . .
O54 O Uani 0.12124(19) 0.4022(3) 0.39257(14) 0.0126(10) 8 1 d . . .
O61 O Uani 0.38832(19) 0.6404(3) 0.13637(14) 0.0144(11) 8 1 d . . .
```

```
O62 O Uani 0.02463(18) -0.0613(3) 0.36725(13) 0.0112(10) 8 1 d . . .
O63 O Uani 0.3574(3) 0.4231(3) 0.17818(18) 0.0356(16) 8 1 d . . .
O614 O Uani 0.3198(3) 0.4539(6) 0.0779(3) 0.0333(18) 8 0.642(5) d . . .
O624 O Uani 0 -0.1527(8) 0.25 0.0333(18) 4 0.716(9) d . . .
O7 O Uani 0.23126(15) -0.0013(3) 0.13780(12) 0.0108(8) 8 1 d . . .

loop_
_atom_site_aniso_label
_atom_site_aniso_type_symbol
_atom_site_aniso_U_11
_atom_site_aniso_U_22
_atom_site_aniso_U_33
_atom_site_aniso_U_12
_atom_site_aniso_U_13
_atom_site_aniso_U_23
Na1 Na 0.0376(16) 0.0148(12) 0.0207(15) -0.0072(14) -0.0108(13)
0.0001(14)
Na2 Na 0.110(3) 0.0156(11) 0.0206(12) -0.0079(16) -0.0278(16) 0.0015(11)
K1 K 0.0221(8) 0.0385(9) 0.0703(14) 0 0.0321(9) 0
K2 K 0.037(6) 0.099(10) 0.062(9) 0 0.038(6) 0
Mn1 Mn 0.0099(3) 0.0132(3) 0.0070(4) 0.0018(2) 0.0024(3) -0.0007(3)
Mn2 Mn 0.0099(3) 0.0199(3) 0.0082(4) 0.0061(3) 0.0024(3) -0.0018(3)
Mn3 Mn 0.0116(3) 0.0091(3) 0.0075(3) 0.0006(3) 0.0001(3) 0.0006(3)
Fe4 Fe 0.0179(3) 0.0196(4) 0.0180(4) 0.0009(3) 0.0037(3) -0.0006(3)
Fe5 Fe 0.0063(3) 0.0101(3) 0.0094(3) 0.0010(2) 0.0030(3) 0.0001(2)
Fe6 Fe 0.0092(3) 0.0089(3) 0.0102(3) -0.0017(2) 0.0036(3) -0.0011(2)
Fe7 Fe 0.0193(6) 0.0522(11) 0.0525(11) 0.0215(6) 0.0223(7) 0.0397(9)
Al1 Al 0.0026(7) 0.0035(6) 0.0042(8) 0.0009(6) 0.0011(6) 0.0011(7)
Cr1 Cr 0.0239(10) 0.0234(10) 0.0337(12) 0.0098(7) 0.0213(10) 0.0125(7)
P1 P 0.0042(4) 0.0047(4) 0.0065(5) 0.0022(4) 0.0020(4) 0.0013(4)
P2 P 0.0076(5) 0.0066(5) 0.0069(6) -0.0003(4) 0.0012(5) -0.0001(4)
P3 P 0.0118(6) 0.0058(5) 0.0081(6) 0.0001(4) -0.0001(5) -0.0015(4)
P4 P 0.0072(5) 0.0046(5) 0.0058(5) 0.0006(4) 0.0011(4) 0.0015(4)
P5 P 0.0067(5) 0.0064(5) 0.0078(5) -0.0013(3) 0.0040(4) -0.0013(4)
P61 P 0.0034(9) 0.0077(8) 0.0066(10) 0.0001(7) 0.0028(8) 0.0008(8)
P62 P 0.024(2) 0.0068(14) 0.031(3) -0.0067(16) 0.021(2) -0.0052(19)
O11 O 0.0039(13) 0.0109(14) 0.0068(15) 0.0001(10) 0.0000(13) -0.0009(11)
O12 O 0.0115(15) 0.0078(13) 0.0122(17) 0.0032(11) 0.0062(15) 0.0046(11)
O13 O 0.0058(13) 0.0097(12) 0.0178(17) 0.0031(11) 0.0012(13) 0.0019(12)
O14 O 0.0107(16) 0.0191(15) 0.0092(17) 0.0069(12) 0.0024(15) -0.0023(13)
O21 O 0.035(2) 0.0080(15) 0.017(2) 0.0072(14) -0.0052(19) 0.0018(13)
O22 O 0.0203(17) 0.0258(17) 0.0061(17) 0.0063(14) 0.0040(15) -0.0016(13)
O23 O 0.0092(16) 0.0199(16) 0.0175(19) 0.0000(12) 0.0062(16) 0.0010(13)
O24 O 0.0127(16) 0.0197(16) 0.0163(19) -0.0011(12) 0.0017(16) -
0.0033(14)
O31 O 0.0073(15) 0.0202(16) 0.025(2) -0.0021(12) 0.0000(16) 0.0089(14)
O32 O 0.0242(18) 0.0006(13) 0.0157(18) -0.0003(12) 0.0009(16) 0.0006(12)
O33 O 0.049(3) 0.0244(19) 0.0100(19) 0.0225(17) -0.0069(19) -0.0103(15)
O34 O 0.0111(16) 0.0158(15) 0.0142(19) 0.0052(12) -0.0010(15) -
0.0036(13)
O41 O 0.0176(16) 0.0118(14) 0.0066(16) 0.0029(12) 0.0026(15) 0.0019(12)
O42 O 0.0054(13) 0.0175(15) 0.0171(17) -0.0012(12) -0.0041(13)
0.0012(13)
O43 O 0.0138(15) 0.0038(12) 0.0098(16) 0.0058(11) 0.0058(14) 0.0019(11)
O44 O 0.0166(16) 0.0056(13) 0.0116(17) -0.0036(11) 0.0050(15) 0.0018(11)
```

```
O51 O 0.0072(15) 0.037(2) 0.0104(17) 0.0085(12) -0.0014(14) -0.0003(13)
O52 O 0.0125(15) 0.0118(14) 0.020(2) -0.0042(11) 0.0122(16) -0.0063(12)
O53 O 0.0028(13) 0.0088(12) 0.0109(16) -0.0025(10) 0.0045(13) -
0.0016(11)
O54 O 0.0107(15) 0.0128(14) 0.0168(18) 0.0010(11) 0.0083(15) 0.0004(13)
O61 O 0.0182(16) 0.0111(14) 0.0190(19) 0.0031(12) 0.0135(16) 0.0028(12)
O62 O 0.0090(14) 0.0082(13) 0.0175(18) -0.0018(10) 0.0056(14) 0.0028(12)
O63 O 0.044(2) 0.0228(18) 0.054(3) 0.0111(16) 0.038(2) 0.0200(18)
O614 O 0.007(2) 0.049(3) 0.044(3) 0.0032(18) 0.007(2) -0.004(2)
O624 O 0.007(2) 0.049(3) 0.044(3) 0.0032(18) 0.007(2) -0.004(2)
O7 O 0.0035(12) 0.0131(12) 0.0154(15) 0.0024(12) 0.0021(12) 0.0004(14)
loop_
_geom_bond_atom_site_label_1
_geom_bond_atom_site_label_2
_geom_bond_site_symmetry_1
_geom_bond_site_symmetry_2
_geom_bond_distance
_geom_bond_publ_flag
Na1 O12 . 2_555 2.617(3) no
Na1 O12 . 4_554 2.617(3) no
Na1 O14 . 2_555 2.761(3) no
Na1 O14 . 4_554 2.761(3) no
Na1 O41 . 5_445 2.549(3) no
Na1 O41 . 7_555 2.549(3) no
Na1 O44 . . 2.375(3) no
Na1 O44 . 3_555 2.375(3) no
Na2 O11 . 5_455 2.332(6) no
Na2 O23 . . 2.402(6) no
Na2 O24 . . 2.717(7) no
Na2 O31 . 6_555 2.399(6) no
Na2 O34 . 6_555 2.615(7) no
Na2 O42 . . 2.777(7) no
Na2 O43 . . 2.350(5) no
K1 K2 . . 1.643(13) no
K1 O22 . . 2.759(4) no
K1 O22 . 2_555 2.759(4) no
K1 O24 . . 2.934(4) no
K1 O24 . 2_555 2.934(4) no
K1 O33 . 5_455 2.906(4) no
K1 O33 . 6_555 2.906(4) no
K2 O22 . . 2.112(4) no
K2 O22 . 2_555 2.112(4) no
K2 O24 . . 2.338(4) no
K2 O24 . 2_555 2.338(4) no
Mn1 O13 . . 2.218(3) no
Mn1 O22 . . 2.074(3) no
Mn1 O31 . . 2.360(4) no
Mn1 O54 . . 2.185(4) no
Mn1 O61 . 6_545 2.314(3) no
Mn1 O7 . 6_555 2.254(3) no
Mn2 O23 . . 2.224(4) no
Mn2 O33 . . 2.080(4) no
Mn2 O42 . . 2.194(3) no
Mn2 O52 . . 2.137(4) no
Mn2 O63 . . 2.527(4) no
```

```
Mn2 O7 . . 2.254(3) no
Mn3 O21 . 6_555 2.113(3) no
Mn3 O23 . . 2.118(3) no
Mn3 O31 . 6_555 2.151(3) no
Mn3 O32 . . 2.133(3) no
Mn3 O63 . . 2.126(5) no
Fe4 O12 . . 2.186(3) no
Fe4 O21 . 4_555 2.170(4) no
Fe4 O32 . 7_556 2.070(3) no
Fe4 O44 . 4_555 2.052(3) no
Fe4 O62 . 3_556 2.201(3) no
Fe4 O7 . 4_555 2.086(3) no
Fe5 O14 . . 2.121(3) no
Fe5 O24 . 2_555 2.024(3) no
Fe5 O43 . 2_555 2.325(3) no
Fe5 O44 . 2_555 2.265(3) no
Fe5 O54 . . 2.122(3) no
Fe5 O61 . 6_545 2.138(4) no
Fe6 O12 . 8_554 2.167(3) no
Fe6 O34 . 2_655 2.074(3) no
Fe6 O41 . . 2.211(3) no
Fe6 O52 . . 2.161(3) no
Fe6 O53 . . 2.209(3) no
Fe6 O62 . 6_555 2.115(3) no
Fe7 P61 . 6_545 2.889(3) no
Fe7 O13 . . 2.131(4) no
Fe7 O13 . 7_556 2.748(4) no
Fe7 O14 . . 2.149(4) no
Fe7 O51 . 4_555 2.054(4) no
Fe7 O61 . 6_545 2.826(4) no
Fe7 O614 . 6_545 1.883(7) no
Al1 O11 . 5_455 1.908(3) no
Al1 O11 . 7_555 1.908(3) no
Al1 O43 . . 1.898(3) no
Al1 O43 . 3_565 1.898(3) no
Al1 O53 . 5_455 1.881(3) no
Al1 O53 . 7_555 1.881(3) no
Cr1 Cr1 . 7_555 1.028(2) no
Cr1 O41 . . 2.297(4) no
Cr1 O41 . 7_555 2.911(4) no
Cr1 O42 . . 2.221(4) no
Cr1 O42 . 7_555 2.580(4) no
Cr1 O51 . . 2.468(3) no
Cr1 O51 . 7_555 2.227(3) no
Cr1 O52 . . 2.857(3) no
Cr1 O614 . . 2.357(6) no
P1 O11 . 8_455 1.541(3) no
P1 O12 . . 1.533(4) no
P1 O13 . 7_556 1.545(3) no
P1 O14 . . 1.544(3) no
P2 O21 . . 1.541(3) no
P2 O22 . . 1.522(4) no
P2 O23 . . 1.559(4) no
P2 O24 . . 1.528(3) no
P3 O31 . . 1.566(4) no
```

```
P3 O32 . . 1.545(3) no
P3 O33 . . 1.523(4) no
P3 O34 . . 1.542(3) no
P4 O41 . 7_555 1.531(4) no
P4 O42 . . 1.524(3) no
P4 O43 . . 1.573(3) no
P4 O44 . . 1.544(4) no
P5 O51 . . 1.536(3) no
P5 O52 . . 1.552(3) no
P5 O53 . . 1.561(3) no
P5 O54 . 6_545 1.531(3) no
P61 P62 . 6_555 0.821(5) no
P61 O61 . . 1.518(3) no
P61 O62 . 6_555 1.586(4) no
P61 O63 . . 1.512(5) no
P61 O614 . . 1.532(6) no
P62 O61 . 6_545 1.534(5) no
P62 O62 . . 1.521(7) no
P62 O63 . 6_545 1.445(7) no
P62 O624 . . 2.744(7) no
loop_
 _geom_angle_atom_site_label_1
 _geom_angle_atom_site_label_2
 _geom_angle_atom_site_label_3
 _geom_angle_site_symmetry_1
 _geom_angle_site_symmetry_2
 _geom_angle_site_symmetry_3
 _geom_angle
 _geom_angle_publ_flag
O12 Na1 O12 2_555 . 4_554 180 no
O12 Na1 O14 2_555 . 2_555 55.38(10) no
O12 Na1 O14 2_555 . 4_554 124.62(10) no
O12 Na1 O41 2_555 . 5_445 109.08(9) no
O12 Na1 O41 2_555 . 7_555 70.92(9) no
O12 Na1 O44 2_555 . . 105.93(9) no
O12 Na1 O44 2_555 . 3_555 74.07(9) no
O12 Na1 O12 4_554 . 2_555 180 no
O12 Na1 O14 4_554 . 2_555 124.62(10) no
O12 Na1 O14 4_554 . 4_554 55.38(10) no
O12 Na1 O41 4_554 . 5_445 70.92(9) no
O12 Na1 O41 4_554 . 7_555 109.08(9) no
O12 Na1 O44 4_554 . . 74.07(9) no
O12 Na1 O44 4_554 . 3_555 105.93(9) no
O14 Na1 O14 2_555 . 4_554 180 no
O14 Na1 O41 2_555 . 5_445 91.93(10) no
O14 Na1 O41 2_555 . 7_555 88.07(10) no
O14 Na1 O44 2_555 . . 68.92(9) no
O14 Na1 O44 2_555 . 3_555 111.08(9) no
O14 Na1 O14 4_554 . 2_555 180 no
O14 Na1 O41 4_554 . 5_445 88.07(10) no
O14 Na1 O41 4_554 . 7_555 91.93(10) no
O14 Na1 O44 4_554 . . 111.08(9) no
O14 Na1 O44 4_554 . 3_555 68.92(9) no
O41 Na1 O41 5_445 . 7_555 180 no
O41 Na1 O44 5_445 . . 118.09(11) no
```

```
O41 Na1 O44 5_445 . 3_555 61.91(11) no
O41 Na1 O41 7_555 . 5_445 180 no
O41 Na1 O44 7_555 . . 61.91(11) no
O41 Na1 O44 7_555 . 3_555 118.09(11) no
O44 Na1 O44 . . 3_555 180 no
O44 Na1 O44 3_555 . . 180 no
O11 Na2 O23 5_455 . . 163.8(3) no
O11 Na2 O24 5_455 . . 132.7(3) no
O11 Na2 O31 5_455 . 6_555 101.3(2) no
O11 Na2 O34 5_455 . 6_555 89.0(2) no
O11 Na2 O42 5_455 . . 97.1(2) no
O11 Na2 O43 5_455 . . 69.47(16) no
O23 Na2 O24 . . . 58.08(16) no
O23 Na2 O31 . . 6_555 81.19(18) no
O23 Na2 O34 . . 6_555 105.8(2) no
O23 Na2 O42 . . . 69.37(17) no
O23 Na2 O43 . . . 108.4(2) no
O24 Na2 O31 . . 6_555 112.6(2) no
O24 Na2 O34 . . 6_555 80.7(2) no
O24 Na2 O42 . . . 88.21(18) no
O24 Na2 O43 . . . 73.93(19) no
O31 Na2 O34 6_555 . 6_555 60.39(16) no
O31 Na2 O42 6_555 . . 126.9(3) no
O31 Na2 O43 6_555 . . 170.4(3) no
O34 Na2 O42 6_555 . . 168.8(3) no
O34 Na2 O43 6_555 . . 115.7(3) no
O42 Na2 O43 . . . 58.63(14) no
O22 K1 O22 . . 2_555 99.64(12) no
O22 K1 O24 . . . 51.57(9) no
O22 K1 O24 . . 2_555 80.76(11) no
O22 K1 O33 . . 5_455 171.10(12) no
O22 K1 O33 . . 6_555 72.91(10) no
O22 K1 O22 2_555 . . 99.64(12) no
O22 K1 O24 2_555 . . 80.76(11) no
O22 K1 O24 2_555 . 2_555 51.57(9) no
O22 K1 O33 2_555 . 5_455 72.91(10) no
O22 K1 O33 2_555 . 6_555 171.10(12) no
O24 K1 O24 . . 2_555 105.38(11) no
O24 K1 O33 . . 5_455 129.83(9) no
O24 K1 O33 . . 6_555 90.66(10) no
O24 K1 O24 2_555 . . 105.38(11) no
O24 K1 O33 2_555 . 5_455 90.66(10) no
O24 K1 O33 2_555 . 6_555 129.83(9) no
O33 K1 O33 5_455 . 6_555 114.91(12) no
O33 K1 O33 6_555 . 5_455 114.91(12) no
O22 K2 O22 . . 2_555 172.6(7) no
O22 K2 O24 . . . 67.57(12) no
O22 K2 O24 . . 2_555 111.97(13) no
O22 K2 O22 2_555 . . 172.6(7) no
O22 K2 O24 2_555 . . 111.97(13) no
O22 K2 O24 2_555 . 2_555 67.57(12) no
O24 K2 O24 . . 2_555 173.4(6) no
O24 K2 O24 2_555 . . 173.4(6) no
O13 Mn1 O22 . . . 171.51(12) no
O13 Mn1 O31 . . . 87.95(12) no
```

```
O13 Mn1 O54 . . . 85.40(12) no
O13 Mn1 O61 . . 6_545 85.49(11) no
O13 Mn1 O7 . . 6_555 89.00(10) no
O22 Mn1 O31 . . . 87.32(13) no
O22 Mn1 O54 . . . 97.70(13) no
O22 Mn1 O61 . . 6_545 87.69(12) no
O22 Mn1 O7 . . 6_555 99.22(12) no
O31 Mn1 O54 . . . 166.31(12) no
O31 Mn1 O61 . . 6_545 92.61(12) no
O31 Mn1 O7 . . 6_555 109.39(11) no
O54 Mn1 O61 . . 6_545 74.96(12) no
O54 Mn1 O7 . . 6_555 82.47(11) no
O61 Mn1 O7 6_545 . 6_555 157.12(12) no
O23 Mn2 O33 . . . 89.50(15) no
O23 Mn2 O42 . . . 84.26(12) no
O23 Mn2 O52 . . . 156.24(12) no
O23 Mn2 O63 . . . 72.14(13) no
O23 Mn2 O7 . . . 115.91(11) no
O33 Mn2 O42 . . . 171.97(16) no
O33 Mn2 O52 . . . 98.08(15) no
O33 Mn2 O63 . . . 85.41(14) no
O33 Mn2 O7 . . . 91.26(12) no
O42 Mn2 O52 . . . 89.63(12) no
O42 Mn2 O63 . . . 97.43(12) no
O42 Mn2 O7 . . . 86.95(10) no
O52 Mn2 O63 . . . 85.99(13) no
O52 Mn2 O7 . . . 86.55(11) no
O63 Mn2 O7 . . . 171.32(12) no
O21 Mn3 O23 6_555 . . 163.23(16) no
O21 Mn3 O31 6_555 . 6_555 94.13(12) no
O21 Mn3 O32 6_555 . . 80.00(12) no
O21 Mn3 O63 6_555 . . 109.90(16) no
O23 Mn3 O31 . . 6_555 94.06(12) no
O23 Mn3 O32 . . . 89.33(12) no
O23 Mn3 O63 . . . 82.83(14) no
O31 Mn3 O32 6_555 . . 168.71(15) no
O31 Mn3 O63 6_555 . . 100.84(15) no
O32 Mn3 O63 . . . 90.26(15) no
O12 Fe4 O21 . . 4_555 173.92(12) no
O12 Fe4 O32 . . 7_556 94.82(12) no
O12 Fe4 O44 . . 4_555 90.56(11) no
O12 Fe4 O62 . . 3_556 80.18(12) no
O12 Fe4 O7 . . 4_555 89.96(12) no
O21 Fe4 O32 4_555 . 7_556 80.10(13) no
O21 Fe4 O44 4_555 . 4_555 94.52(12) no
O21 Fe4 O62 4_555 . 3_556 103.25(14) no
O21 Fe4 O7 4_555 . 4_555 86.33(14) no
O32 Fe4 O44 7_556 . 4_555 174.62(13) no
O32 Fe4 O62 7_556 . 3_556 92.47(13) no
O32 Fe4 O7 7_556 . 4_555 85.54(13) no
O44 Fe4 O62 4_555 . 3_556 88.65(12) no
O44 Fe4 O7 4_555 . 4_555 94.26(13) no
O62 Fe4 O7 3_556 . 4_555 169.76(12) no
O14 Fe5 O24 . . 2_555 172.78(15) no
O14 Fe5 O43 . . 2_555 84.39(12) no
```

```
O14 Fe5 O44 . . 2_555 83.55(12) no
O14 Fe5 O54 . . . 93.99(12) no
O14 Fe5 O61 . . 6_545 87.57(13) no
O24 Fe5 O43 2_555 . 2_555 89.22(13) no
O24 Fe5 O44 2_555 . 2_555 90.66(13) no
O24 Fe5 O54 2_555 . . 90.90(13) no
O24 Fe5 O61 2_555 . 6_545 98.51(14) no
O43 Fe5 O44 2_555 . 2_555 64.16(10) no
O43 Fe5 O54 2_555 . . 105.02(12) no
O43 Fe5 O61 2_555 . 6_545 170.76(11) no
O44 Fe5 O54 2_555 . . 169.04(13) no
O44 Fe5 O61 2_555 . 6_545 110.43(11) no
O54 Fe5 O61 . . 6_545 80.05(12) no
O12 Fe6 O34 8_554 . 2_655 89.21(13) no
O12 Fe6 O41 8_554 . . 86.42(12) no
O12 Fe6 O52 8_554 . . 175.48(12) no
O12 Fe6 O53 8_554 . . 108.30(12) no
O12 Fe6 O62 8_554 . 6_555 82.57(12) no
O34 Fe6 O41 2_655 . . 167.29(14) no
O34 Fe6 O52 2_655 . . 91.08(13) no
O34 Fe6 O53 2_655 . . 89.99(11) no
O34 Fe6 O62 2_655 . 6_555 97.10(12) no
O41 Fe6 O52 . . . 92.34(12) no
O41 Fe6 O53 . . . 80.09(10) no
O41 Fe6 O62 . . 6_555 94.17(11) no
O52 Fe6 O53 . . . 67.18(12) no
O52 Fe6 O62 . . 6_555 101.87(13) no
O53 Fe6 O62 . . 6_555 167.17(11) no
O13 Fe7 O13 . . 7_556 90.04(14) no
O13 Fe7 O14 . . . 102.68(16) no
O13 Fe7 O51 . . 4_555 119.66(16) no
O13 Fe7 O61 . . 6_545 75.27(13) no
O13 Fe7 O614 . . 6_545 113.8(3) no
O13 Fe7 O13 7_556 . . 90.04(14) no
O13 Fe7 O14 7_556 . . 59.36(12) no
O13 Fe7 O51 7_556 . 4_555 87.31(15) no
O13 Fe7 O61 7_556 . 6_545 123.56(13) no
O13 Fe7 O614 7_556 . 6_545 154.5(3) no
O14 Fe7 O51 . . 4_555 126.1(2) no
O14 Fe7 O61 . . 6_545 71.15(13) no
O14 Fe7 O614 . . 6_545 104.4(2) no
O51 Fe7 O61 4_555 . 6_545 147.18(17) no
O51 Fe7 O614 4_555 . 6_545 88.3(2) no
O61 Fe7 O614 6_545 . 6_545 59.1(2) no
O11 Al1 O11 5_455 . 7_555 180 no
O11 Al1 O43 5_455 . . 89.01(11) no
O11 Al1 O43 5_455 . 3_565 90.99(11) no
O11 Al1 O53 5_455 . 5_455 87.93(13) no
O11 Al1 O53 5_455 . 7_555 92.07(13) no
O11 Al1 O11 7_555 . 5_455 180 no
O11 Al1 O43 7_555 . . 90.99(11) no
O11 Al1 O43 7_555 . 3_565 89.01(11) no
O11 Al1 O53 7_555 . 5_455 92.07(13) no
O11 Al1 O53 7_555 . 7_555 87.93(13) no
O43 Al1 O43 . . 3_565 180 no
```

```
O43 A11 O53 .  .  5_455 87.59(13) no
O43 A11 O53 .  .  7_555 92.41(13) no
O43 A11 O43 3_565 .  .  180 no
O43 A11 O53 3_565 .  5_455 92.41(13) no
O43 A11 O53 3_565 .  7_555 87.59(13) no
O53 A11 O53 5_455 .  7_555 180 no
O53 A11 O53 7_555 .  5_455 180 no
O41 Cr1 O41 .  .  7_555 161.63(13) no
O41 Cr1 O42 .  .  .  140.52(13) no
O41 Cr1 O42 .  .  7_555 61.04(11) no
O41 Cr1 O51 .  .  .  92.48(12) no
O41 Cr1 O51 .  .  7_555 99.26(13) no
O41 Cr1 O52 .  .  .  74.59(11) no
O41 Cr1 O614 .  .  .  73.98(18) no
O41 Cr1 O41 7_555 .  .  161.63(13) no
O41 Cr1 O42 7_555 .  .  56.11(10) no
O41 Cr1 O42 7_555 .  7_555 101.36(10) no
O41 Cr1 O51 7_555 .  .  79.26(10) no
O41 Cr1 O51 7_555 .  7_555 83.03(11) no
O41 Cr1 O52 7_555 .  .  112.64(11) no
O41 Cr1 O614 7_555 .  .  123.72(18) no
O42 Cr1 O42 .  .  7_555 156.78(12) no
O42 Cr1 O51 .  .  .  87.02(13) no
O42 Cr1 O51 .  .  7_555 97.19(14) no
O42 Cr1 O52 .  .  .  72.70(11) no
O42 Cr1 O614 .  .  .  76.8(2) no
O42 Cr1 O42 7_555 .  .  156.78(12) no
O42 Cr1 O51 7_555 .  .  82.70(12) no
O42 Cr1 O51 7_555 .  7_555 84.18(13) no
O42 Cr1 O52 7_555 .  .  116.97(11) no
O42 Cr1 O614 7_555 .  .  125.3(2) no
O51 Cr1 O51 .  .  7_555 155.38(13) no
O51 Cr1 O52 .  .  .  55.74(9) no
O51 Cr1 O614 .  .  .  130.89(17) no
O51 Cr1 O51 7_555 .  .  155.38(13) no
O51 Cr1 O52 7_555 .  .  148.49(12) no
O51 Cr1 O614 7_555 .  .  73.47(17) no
O52 Cr1 O614 .  .  .  75.16(16) no
O11 P1 O12 8_455 .  .  110.57(18) no
O11 P1 O13 8_455 .  7_556 108.27(16) no
O11 P1 O14 8_455 .  .  111.48(17) no
O12 P1 O13 .  .  7_556 110.81(17) no
O12 P1 O14 .  .  .  108.85(17) no
O13 P1 O14 7_556 .  .  106.80(18) no
O21 P2 O22 .  .  .  111.7(2) no
O21 P2 O23 .  .  .  107.7(2) no
O21 P2 O24 .  .  .  110.25(18) no
O22 P2 O23 .  .  .  110.02(19) no
O22 P2 O24 .  .  .  108.9(2) no
O23 P2 O24 .  .  .  108.18(19) no
O31 P3 O32 .  .  .  107.9(2) no
O31 P3 O33 .  .  .  109.5(2) no
O31 P3 O34 .  .  .  108.90(19) no
O32 P3 O33 .  .  .  111.0(2) no
O32 P3 O34 .  .  .  109.63(17) no
```

```
O33 P3 O34 . . . 109.9(2) no
O41 P4 O42 7_555 . . 109.1(2) no
O41 P4 O43 7_555 . . 111.98(16) no
O41 P4 O44 7_555 . . 111.17(17) no
O42 P4 O43 . . . 110.06(16) no
O42 P4 O44 . . . 111.51(17) no
O43 P4 O44 . . . 102.92(18) no
O51 P5 O52 . . . 108.94(17) no
O51 P5 O53 . . . 111.60(18) no
O51 P5 O54 . . 6_545 112.06(17) no
O52 P5 O53 . . . 101.95(17) no
O52 P5 O54 . . 6_545 112.89(19) no
O53 P5 O54 . . 6_545 109.00(17) no
O61 P61 O62 . . 6_555 108.5(2) no
O61 P61 O63 . . . 114.3(3) no
O61 P61 O614 . . . 107.8(3) no
O62 P61 O63 6_555 . . 109.1(2) no
O62 P61 O614 6_555 . . 111.7(3) no
O63 P61 O614 . . . 105.4(3) no
O61 P62 O62 6_545 . . 111.1(4) no
O61 P62 O63 6_545 . 6_545 117.4(4) no
O61 P62 O624 6_545 . . 153.0(3) no
O62 P62 O63 . . 6_545 116.6(3) no
O62 P62 O624 . . . 83.3(2) no
O63 P62 O624 6_545 . . 71.5(2) no
Mn1 O7 Mn2 6_545 . . 131.96(11) no
Mn1 O7 Fe4 6_545 . 4_554 112.61(14) no
Mn2 O7 Fe4 . . 4_554 111.24(14) no
```

**Claims**

1. A phosphate based compound comprising :

- A: extractable cations used in charging and discharging and being at least one of Li, Na, K and Ag,

- wherein up to 25 Mol-% of the compound may be present in each of the following categories:

- elements of Group 1 of the periodic table of elements,
- elements of Group 2 of the periodic table of elements,
- elements of Group 13 of the periodic table of elements
- elements of the group of transition metals, group 3-12 of the periodic table of elements, e. g. Mn, Fe, Ag
- elements of Group 14 of the periodic table of elements, e. g. Pb

- B: non-exchangeable cations from the transition metals, e. g. Fe, Mn, Co, Cr, Ti, V, Cu, Sc

- wherein 9 Mol-% - 23 Mol-%, preferably 16 Mol-% of the compound may be present in each of the following categories:

- elements of Group 1 of the periodic table of elements,
- elements of Group 2 of the periodic table of elements,
- elements of Group 13 of the periodic table of elements,
- elements of the group of transition metals, group 3-12 of the periodic table of elements, e. g. Mn, Fe,
- elements of Group 14 of the periodic table of elements, e. g. Pb

- C: 60 Mol-% - 90 Mol-%, preferably 75 Mol-% of the compound is anionic in the form of phosphate $(PO_4)^{3-}$

anions, where oxygen is or may be partially substituted by a halide (e. g. $F^-$, $Cl^-$) and/or $OH^-$ to a maximum concentration of 10 Mol-% of the oxygen of the anions,

- wherein said phosphate $(PO_4)^{3-}$ anions may be partially substituted by one or more of:

- $SiO_4^{4-}$ silicate,
- $BO_3^{3-}$ borate,
- $CO_3^{2-}$ carbonate,
- $H_2O$ water
up to a maximum amount of < 31 Mol-% of the anions,

- said compound being in crystalline form and having open elongate channels extending through the unit cell of the structure and
- with the compound being present either in single crystal form or as an anisotropic microcrystalline or nanocrystalline material.

2. A compound in accordance with claim 1, wherein it additionally consists of at least one element selected from the group consisting of Group 2 of the periodic table of elements and aluminium.

3. A compound in accordance with claim 1 or claim 2 wherein the element selected from the group of transition metals, group 3 - 12 of the periodic table of elements, comprises at least one of Sc, Ti, V, Cr, Mn, Fe, Co, Ni, Cu and Zn.

4. Use of a compound in accordance with any one of the preceding claims as an electrode material such as a cathode for a primary or secondary battery or in another form of electrochemical storage device.

5. Use of a compound in accordance with any one of the preceding claims 1 to 3 as an electroactive material e.g. as a semipermeable membrane used as separator in an electrochemical cell or a battery.

6. Use of a compound in accordance with any one of the preceding claims as an electroactive material as an anode for primary or secondary battery.

7. Use in accordance with claim 4 wherein, in a lithium battery, the element selected for the exchangeable cations is Li, or, in a sodium battery, the element selected for the exchangeable cations is Na, or, in a potassium battery the element selected for the exchangeable cations is K, or, in a silver battery, the element selected for the exchangeable cations is Ag.

8. An ion exchange material comprising the phosphate based compound of any one of claims 1 to 3.

9. An electrochemical storage device comprising an electrode or separator formed of a phosphate based compound in accordance with any one of claims 1 to 3.

10. A method of preparing a phosphate based compound in accordance with any one of claims 1 to 3 comprising the steps of:

- removing from the earth in a suitable location, e. g. the Nickel Plate mine in South Dakota, USA or the Hagendorf mine in the Oberpfalz, Bavaria, Germany, a naturally occurring compound having the chemical composition of any one of claims 1 to 3 together with impurities,
- purification of the naturally occurring compound to remove the impurities, and
- chemically treating the naturally occurring compound, preferably after purification, to remove, so far as possible, mobile cations of the type A and the naturally occurring impurities to clean the open elongate channels extending through the unit cell of the structure.

11. A method in accordance with claim 10 wherein said purification process comprises a flotation process.

12. A method of preparing a phosphate based compound in accordance with any one of claims 1 to 3, wherein the compound is made by synthesis and is chemically treated to remove an element forming exchangeable cations, for example Li, Na, K, Ag and/or Al to unload or clean the elongate channels extending through the unit cell of the structure.

13. A method in accordance with claim 12 wherein said synthesis:

is a hydrothermal synthesis, carried out using:

B: non-exchangeable cations, e.g. in the form of an oxide of one or more transition metals, group 3 - 12 of the periodic table of elements, e. g. $Fe_2O_3$
C: anions in the form of a phosphate, e. g. $(NH4)_2HPO_4$ or $(Na,K)_2HPO_4$,
A: exchangeable cations as a soluble salt of one of Li, Na, K and Ag , e. g. KCl, the method being carried out in a pressure vessel in the presence of water in a temperature range of 300° C - 600° C, e. g. 450° C with the initial concentration of the aqueous solution being selected so that the concentration of type A cations, e. g. KCl amounts to 30 - 70 wt%, preferably to about 50 wt% and with CsCl being present in an mount of 70 - 30 wt%, preferably e. g. 50 wt%.

14. Preparation in accordance with any one of claims 8 to 12, wherein said chemical treatment step is carried out using a complex forming agent, e. g. EDTA (2-[2-(Bis(carboxymethyl)amino)ethyl-(carboxymethyl)amino]acetic acid), pentan-2,4-dion (acetyl-acetone), crown-ethers e.g. 18-crown-6, or 1,5-diphenylthiocarbazon (dithizone).

15. Preparation in accordance with any one of claims 10 to 14 and including the further step of at least partially filling the open elongate channels with an active element selected from Group 1 of the periodic table of elements, e. g. Li, Na, K and Ag.

16. Preparation in accordance with claim 15, wherein said filling step is carried out by a chemical process e. g. by immersing the said compound in a salt melt, preparing the said compound in suspension or electrochemically.

17. An electroactive crystalline material in the form of a phosphate based compound having a structure comprising:

A: - exchangeable cations used in charging and discharge ing
B: - non exchangeable cations of one or more of the transition metals,
C: - 60 Mol-% - 90 Mol-%, preferably 75 Mol-% of the compound being present in the form of phosphate $(PO_4)^{3-}$ anions, where oxygen is optionally partially substituted by a halide (e. g. F-, Cl-) and/or OH- to a maximum concentration of 10 Mol-% of the oxygen of the anions and wherein said $(PO_4)^{3-}$ coordination polyhedra may be partially substituted by one or more of:

- $SiO_4^{4-}$ silicate,
- $BO_3^{3-}$ borate,
- $CO_3^{2-}$ carbonate,
- $H_2O$ water up to a maximum amount of < 31 Mol-% of the anions,

- said compound being in crystalline form and having at least one open elongate channel extending through the unit cell of the structure or a channel filled with one species of exchangeable cation and
- with the compound being present either in single crystal form or as an anisotropic microcrystalline or nanocrystalline material.

Krutik, V.M.;Pushcharovskii, D.Yu.;Pobedimskaya, E.A.;Belov, N.V. "Crystal structure of arrojadite", Kristallografiya 24, 743-750, 1979
ICSD CC=201275


Merlino, S.;Mellini, M.;Zanazzi, P.F. "Structure of arrojadite, K Na4 Ca Mn4 Fe10 Al (P O4)12 (O H)2" Acta Crystallographica B37, 1733-1736, 1981
ICSD CC=31752


Moore, P.B.;Araki, T.;Merlino, S.;Mellini, M.;Zanazzi, P.F.
"The Arrojdite - Dickinsonite series, K Na4 Ca (Fe, Mn)14 Al (O H)2 (P O4)12: crystal structure and crystal chemistry", American Mineralogist 66, 1034-1049, 1981
ICSD CC=100871, CC=100872


Yakubovich, O.V.;Matvienko, E.N.;Simonov, M.A.;Mel'nikov, O.K.
"Crystal structure of synthetic Fe3+arrojadite, with the ideal formula K2 Na5 Fe14 Fe (P O4)12 (O H)2", Vestnik Moskovskogo Universiteta, Geologiya 41, 36-47, 1986
ICSD CC=56299


Camara, F.;Oberti, R.;Chopin, C.;Medenbach, O.
"The arrojadite enigma: I. A new formula and a new model for the arrojadite structure", American Mineralogist 91, 1249-1259, 2006
ICSD CC=156571

**FIG. 1**

FIG 2A

FIG 2B

FIG, 2C

FIG 2D

FIG 2E

20

mining a
deposit

21

the mineral as educt

22

**step 1**
extraction process (T = 293 K)

24

26

**step 2**

lithium enrichment

| lithium salt melt (T = 510 K) | suspension (T = 340 K) | electro-chemistry |

processing into a cathode
of a lithium ion battery

28

FIG 3A

FIG 3B

FIG. 3C

# Air

Heating | Cooling

| Arrojadite | Arrojadite |

293 393 493 593 693 793 820 793 693 593 493 393 293

Temperature (K)

FIG. 4A

FIG 4B

## Nitrogen Atmosphere

Heating          Cooling

| Arrojadite | Arrojadite |

293  393  493  593  693  793 820 793  693  593  493  393  293

Temperature (K)

FIG. 5A

# Nitrogen Atmosphere

Heating →    Cooling ⇢

413

Li(y2)FePO4

Li(y1)FePO4

473

| LixFePO4 | LixFePO4 |

FePO4          FePO4

Li0,68FePO4      LiFePO4

293   393   493   593 623 593   493   393   293

## Temperature (K)

FIG 5B

FIC. 6

FIG 7

EP 2 196 434 A1

| | LiFePO$_4$ | FePO$_4$ | Difference $\frac{\text{LiFePO}_4}{\text{FePO}_4}$ |
|---|---|---|---|
| Crystal system | orthorhombic | | |
| Space group | Nr. 62, *Pnmb* | | |
| *a* [pm] | 600,8(3) | 579,2(1) | -3,7(3) % |
| *b* [pm] | 1033,4(4) | 982,1(1) | -5,2(3) % |
| *c* [pm] | 469,3(1) | 478,8(1) | +1,9(8) % |
| $\beta$ [°] | 90 | 90 | |
| *V* [10$^6$pm$^3$] | 291 | 272 | -6,9(9) % |

FIG. 8

## IUPAC Periodic Table of the Elements

Key:
atomic number
**Symbol**
name
standard atomic weight

| 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|
| 1 **H** hydrogen 1.00794(7) | | | | | | | | | | | | | | | | | 2 **He** helium 4.002602(2) |
| 3 **Li** lithium 6.941(2) | 4 **Be** beryllium 9.012182(3) | | | | | | | | | | | 5 **B** boron 10.811(7) | 6 **C** carbon 12.0107(8) | 7 **N** nitrogen 14.0067(2) | 8 **O** oxygen 15.9994(3) | 9 **F** fluorine 18.9984032(5) | 10 **Ne** neon 20.1797(6) |
| 11 **Na** sodium 22.989 769 28(2) | 12 **Mg** magnesium 24.3050(6) | | | | | | | | | | | 13 **Al** aluminium 26.981 5386(8) | 14 **Si** silicon 28.0855(3) | 15 **P** phosphorus 30.973 762(2) | 16 **S** sulfur 32.065(5) | 17 **Cl** chlorine 35.453(2) | 18 **Ar** argon 39.948(1) |
| 19 **K** potassium 39.0983(1) | 20 **Ca** calcium 40.078(4) | 21 **Sc** scandium 44.955 912(6) | 22 **Ti** titanium 47.867(1) | 23 **V** vanadium 50.9415(1) | 24 **Cr** chromium 51.9961(6) | 25 **Mn** manganese 54.938 045(5) | 26 **Fe** iron 55.845(2) | 27 **Co** cobalt 58.933 195(5) | 28 **Ni** nickel 58.6934(2) | 29 **Cu** copper 63.546(3) | 30 **Zn** zinc 65.409(4) | 31 **Ga** gallium 69.723(1) | 32 **Ge** germanium 72.64(1) | 33 **As** arsenic 74.921 60(2) | 34 **Se** selenium 78.96(3) | 35 **Br** bromine 79.904(1) | 36 **Kr** krypton 83.798(2) |
| 37 **Rb** rubidium 85.4678(3) | 38 **Sr** strontium 87.62(1) | 39 **Y** yttrium 88.905 85(2) | 40 **Zr** zirconium 91.224(2) | 41 **Nb** niobium 92.906 38(2) | 42 **Mo** molybdenum 95.94(2) | 43 **Tc** technetium [98] | 44 **Ru** ruthenium 101.07(2) | 45 **Rh** rhodium 102.905 50(2) | 46 **Pd** palladium 106.42(1) | 47 **Ag** silver 107.8682(2) | 48 **Cd** cadmium 112.411(8) | 49 **In** indium 114.818(3) | 50 **Sn** tin 118.710(7) | 51 **Sb** antimony 121.760(1) | 52 **Te** tellurium 127.60(3) | 53 **I** iodine 126.904 47(3) | 54 **Xe** xenon 131.293(6) |
| 55 **Cs** caesium 132.905 451 9(2) | 56 **Ba** barium 137.327(7) | 57-71 lanthanoids | 72 **Hf** hafnium 178.49(2) | 73 **Ta** tantalum 180.947 88(2) | 74 **W** tungsten 183.84(1) | 75 **Re** rhenium 186.207(1) | 76 **Os** osmium 190.23(3) | 77 **Ir** iridium 192.217(3) | 78 **Pt** platinum 195.084(9) | 79 **Au** gold 196.966 569(4) | 80 **Hg** mercury 200.59(2) | 81 **Tl** thallium 204.3833(2) | 82 **Pb** lead 207.2(1) | 83 **Bi** bismuth 208.980 40(1) | 84 **Po** polonium [209] | 85 **At** astatine [210] | 86 **Rn** radon [222] |
| 87 **Fr** francium [223] | 88 **Ra** radium [226] | 89-103 actinoids | 104 **Rf** rutherfordium [261] | 105 **Db** dubnium [262] | 106 **Sg** seaborgium [266] | 107 **Bh** bohrium [264] | 108 **Hs** hassium [277] | 109 **Mt** meitnerium [268] | 110 **Ds** darmstadtium [271] | 111 **Rg** roentgenium [272] | | | | | | | |

| 57 **La** lanthanum 138.905 47(7) | 58 **Ce** cerium 140.116(1) | 59 **Pr** praseodymium 140.907 65(2) | 60 **Nd** neodymium 144.242(3) | 61 **Pm** promethium [145] | 62 **Sm** samarium 150.36(2) | 63 **Eu** europium 151.964(1) | 64 **Gd** gadolinium 157.25(3) | 65 **Tb** terbium 158.925 35(2) | 66 **Dy** dysprosium 162.500(1) | 67 **Ho** holmium 164.930 32(2) | 68 **Er** erbium 167.259(3) | 69 **Tm** thulium 168.934 21(2) | 70 **Yb** ytterbium 173.04(3) | 71 **Lu** lutetium 174.967(1) |
|---|---|---|---|---|---|---|---|---|---|---|---|---|---|---|
| 89 **Ac** actinium [227] | 90 **Th** thorium 232.038 06(2) | 91 **Pa** protactinium 231.035 88(2) | 92 **U** uranium 238.028 91(3) | 93 **Np** neptunium [237] | 94 **Pu** plutonium [244] | 95 **Am** americium [243] | 96 **Cm** curium [247] | 97 **Bk** berkelium [247] | 98 **Cf** californium [251] | 99 **Es** einsteinium [252] | 100 **Fm** fermium [257] | 101 **Md** mendelevium [258] | 102 **No** nobelium [259] | 103 **Lr** lawrencium [262] |

**Notes**
- "Aluminum" and "cesium" are commonly used alternative spellings for "aluminium" and "caesium".
- IUPAC 2005 standard atomic weights (mean relative atomic masses) are listed with uncertainties in the last figure in parentheses [M. E. Wieser, Pure Appl. Chem. 78, 2051 (2006)]. These values correspond to current best knowledge of the elements in natural terrestrial sources. For elements that have no stable or long-lived nuclides, the mass number of the nuclide with the longest confirmed half-life is listed between square brackets.
- Elements with atomic numbers 112 and above have been reported but not fully authenticated.

FIG 9

57

FIG. 11

FIG. 10

Europäisches
Patentamt

European
Patent Office

Office européen
des brevets

## EUROPEAN SEARCH REPORT

**Application Number**

EP 08 02 1669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEMARTIN F ET AL: "Sigismundite, (Ba,K,Pb)Na3(Ca,Sr)(Fe,Mg,Mn)14Al(OH)2(PO4)12, a new Ba-rich member of the arrojadite group from Spluga Valley, Italy" CANADIAN MINERALOGIST, MINERALOGICAL ASSOCIATION OF CANADA, OTTAWA, CA, vol. 34, no. 4, 1 January 1996 (1996-01-01), pages 827-834, XP008111772 ISSN: 0008-4476 * page 828, column III, line 20 - page 829, column IV, line 58 * | 1-11, 14-17 | INV. C01B25/45 H01M4/58 |
| X | SHINNO I ET AL: "Octahedral site Fe2+ quadrupole splitting distributions from the Mossbauer spectra of arrojadite" AMERICAN MINERALOGIST, WASHINGTON, DC, US, US, vol. 83, no. 11-12, part 1, 1 January 1998 (1998-01-01), pages 1316-1322, XP008111769 ISSN: 0003-004X * page 1316 * | 1-3 | |
| X | CAMARA F ET AL: "The arrojadite enigma: I. A new formula and a new model for the arrojadite structure" AMERICAN MINERALOGIST, WASHINGTON, DC, US, US, vol. 91, no. 8-9, 1 January 2006 (2006-01-01), pages 1249-1259, XP008111770 ISSN: 0003-004X * page 1249, paragraph 1 * | 1-3 | |

**TECHNICAL FIELDS SEARCHED (IPC)**

C01B
H01M

-/--

~~The present search report has been drawn up for all claims~~

| Place of search | Date of completion of the search | Examiner |
|---|---|---|
| The Hague | 30 September 2009 | Lecerf, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**

**European Patent Office**

**Office européen des brevets**

## EUROPEAN SEARCH REPORT

Application Number

EP 08 02 1669

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | N. RAVET, Y. CHOUINARD, J.F. MAGNAN, S. BESNER, M. GAUTHIER, M. ARMAND: "Electroactivity of natural and synthetic triphylite" JOURNAL OF POWER SOURCES, vol. 97-98, 1 July 2001 (2001-07-01), pages 503-507, XP002546063 * the whole document * | 1-9,17 | |
| X | US 4 289 612 A (SCHRIEBER GLENN H) 15 September 1981 (1981-09-15) * column 1, line 39 - column 3, line 35; figure 1; example 1 * | 10,11, 14-16 | |
| A | CHOPIN C ET AL: "The arrojadite enigma: II. Compositional space, new members, and nomenclature of the group" AMERICAN MINERALOGIST, WASHINGTON, DC, US, US, vol. 91, no. 8-9, 1 January 2006 (2006-01-01), pages 1260-1270, XP008111771 ISSN: 0003-004X * abstract * | 1-11, 14-17 | |
| D,A | MOORE P B ET AL: "The arrojadite -dickinsonite series, $KNa_4Ca(Fe,Mn)14^{2+}Al(OH)_2(PO_4)_{12}$: crystal structure and crystal chemistry" AMERICAN MINERALOGIST, WASHINGTON, DC, US, US, vol. 66, no. 9-10, 1 January 1981 (1981-01-01), pages 1034-1049, XP008111768 ISSN: 0003-004X * abstract * | 1-11, 14-17 | **TECHNICAL FIELDS SEARCHED (IPC)** |

-/--

~~The present search report has been drawn up for all claims~~

| Place of search | Date of completion of the search | Examiner |
|---|---|---|
| The Hague | 30 September 2009 | Lecerf, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 02 1669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | S. MERLINO, M. MELLINI: "Structure of Arrojadite, KNa4CaMn4Fe10Al(PO4)12(OH,F)2" ACTA CRYSTALLOGRAPHICA, vol. B37, no. 9, 1 September 1981 (1981-09-01), pages 1733-1736, XP002546064 * the whole document * | 1-11, 14-17 | |

TECHNICAL FIELDS
SEARCHED      (IPC)

~~The present search report has been drawn up for all claims~~

| Place of search | Date of completion of the search | Examiner |
|---|---|---|
| The Hague | 30 September 2009 | Lecerf, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**Application Number**

EP 08 02 1669

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

see annex

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 02 1669

The Search Division considers that the present European patent application does not comply with the
requirements of unity of invention and relates to several inventions or groups of inventions, namely:

1. claims: 1-11, part of 14 part of 15, part of 16 and 17

The problem to be solved by the first invention is to
provide:
- a phosphate based compound
- the use of the said phosphate based compound as an
electrode material
- a method for preparing the said phosphate based compound
by extracting a naturally occurring phosphate compound, by
purifying it and by treating it chemically.
---

2. claims: 12, 13, part of 14, part of 15, part of 16

The problem to be solved by the second invention is to
provide a method for preparing the said phosphate based
compound by synthesis and by treating it  chemically.
---

## ANNEX TO THE EUROPEAN SEARCH REPORT
## ON EUROPEAN PATENT APPLICATION NO.

EP 08 02 1669

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2009

| Patent document cited in search report | Publication date | Patent family member(s) | | Publication date |
|---|---|---|---|---|
| US 4289612 A | 15-09-1981 | AU | 7095981 A | 17-12-1981 |
| | | BR | 8103595 A | 02-03-1982 |
| | | CA | 1130017 A1 | 17-08-1982 |
| | | IL | 62936 A | 30-03-1984 |
| | | MA | 19174 A1 | 31-12-1981 |
| | | ZA | 8103760 A | 30-06-1982 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1505680 B1

### Non-patent literature cited in the description

- **Ravet, N. ; Chouinard, J. ; Besner, S. ; Gautier, M. ; Armand, M.** Electroactivity of natural and synthetic triphylite. *Journal of power sources,* 2001, vol. 97-98, 503-507
- **O. V. Yakubovich ; E. N. Matvienko ; M. A. Simonov ; O.K. Mel'nikov.** Crystal Structure of Synnthetic Fe3+- Arrojadite with ideal formula of K2Na5Fe2+14Fe3+(PO4)12(OH). *Vestnik Moskovskogo Universiteta, Geologiya,* 1986, vol. 41 (1), 36-47
- **Lindberg, M.L.** Arrojadite, hühnerkobelite and graftonite. *Am. Mineral.,* 1950, vol. 35, 59-76
- **Yakubovich, O. ; Matvienko, E. N. ; Simonov, M. A ; Mellnikov, O. K.** Crystal structure of synthetic Fe3+ - arrojadite with ideal formula of K2Na5Fe2+14Fe3+(PO4)12(OH). *Geologiya,* 1986, vol. 41, 36-47
- **Yamada, A ; Chung, S. C. ; Hinokuma, K.** Optimised LiFePO4 for lithium battery cathodes. *Journal of the Electrochemical Society,* 2001, vol. 148, A224-229
- Modern zeolites. **Tomlinson A. A. G.** Structure and function in detergents and petrochemicals. Trans Tech Publications Ltd, 1998
- **J. L. Sudworth.** Zebra batteries. *Journal of Power Sources,* 1994, vol. 51, 105-114